(19) Europäisches Patentamt / European Patent Office / Office européen des brevets

(11) **EP 4 375 699 A1**

(12) **EUROPEAN PATENT APPLICATION**

(43) Date of publication:
**29.05.2024 Bulletin 2024/22**

(21) Application number: **23194172.5**

(22) Date of filing: **30.08.2023**

(51) International Patent Classification (IPC):
**G01S 7/48** *(2006.01)* **G01S 7/497** *(2006.01)*
**G01S 17/58** *(2006.01)* **G01S 17/86** *(2020.01)*
**G01S 17/89** *(2020.01)* **G01S 17/931** *(2020.01)*

(52) Cooperative Patent Classification (CPC):
**G01S 17/89; G01S 7/4808; G01S 7/4972;
G01S 17/42; G01S 17/58; G01S 17/86;
G01S 17/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.11.2022 JP 2022189098**

(71) Applicant: **KABUSHIKI KAISHA TOSHIBA**
**Minato-ku**
**Tokyo 105-0023 (JP)**

(72) Inventor: **BAN, Koichiro**
**Minato-ku, Tokyo, 105-0023 (JP)**

(74) Representative: **Hoffmann Eitle**
**Patent- und Rechtsanwälte PartmbB**
**Arabellastraße 30**
**81925 München (DE)**

(54) **INFORMATION PROCESSING DEVICE, INFORMATION PROCESSING SYSTEM, AND PROGRAM**

(57) According to one arrangement, an information processing device includes: a first calculation unit configured to calculate a velocity of a moving object and an angle of change in a traveling direction of the moving object based on position information indicating a position of the moving object; a second calculation unit configured to calculate, based on point cloud information measured in a first coordinate system fixed to the moving object, a deviation angle between a second coordinate system fixed to the moving object and having an axis along the traveling direction and the first coordinate system; and a transformation unit configured to transform first point cloud information measured at a first time from the first coordinate system at the first time to the first coordinate system at a second time based on the velocity, the angle of change, and the deviation angle.

FIG. 1

EP 4 375 699 A1

**Description**

FIELD

Arrangements described herein relate generally to an information processing device, an information processing system, and a program.

BACKGROUND

A laser range scanner called a light detection and ranging (LiDAR) scanner is known. The LiDAR scanner irradiates an object with laser light, and detects the intensity of light reflected from the object by a photodetector. Then, the LiDAR scanner measures a distance from the LiDAR to the object based on a temporal change in a light intensity signal output from the photodetector.

By attaching such a LiDAR scanner to a moving object, it is possible to acquire three-dimensional point cloud information indicating an object around the moving object. The three-dimensional point cloud information is used, for example, for detecting an object.

BRIEF DESCRIPTION OF THE DRAWINGS

FIG. 1 is a diagram illustrating an example of a configuration of an information processing system according to a first arrangement.

FIG. 2 is a block diagram illustrating an example of a hardware configuration of the information processing device according to the first arrangement.

FIG. 3 is a diagram illustrating an example of a relationship between a traveling direction of a moving object and a LiDAR coordinate system according to the first arrangement.

FIG. 4 is a block diagram illustrating an example of a hardware configuration of a laser range scanner according to the first arrangement.

FIG. 5 is a plan view illustrating an example of a relationship between a mirror mounted on the laser range scanner and a field of view of the laser range scanner according to the first arrangement.

FIG. 6 is a side view illustrating an example of a relationship between the mirror mounted on the laser range scanner and the field of view of the laser range scanner according to the first arrangement.

FIG. 7 is a timing chart illustrating an example of a relationship between subframes and frames obtained from point cloud information according to the first arrangement.

FIG. 8 is a diagram illustrating an example of a relationship between subframes and a frame obtained from point cloud information according to the first arrangement.

FIG. 9 is a block diagram illustrating an example of a functional configuration of a control circuit of the information processing device according to the first arrangement.

FIG. 10 is a diagram illustrating a first example of a functional configuration of a deviation angle calculation unit according to the first arrangement.

FIG. 11 is a diagram illustrating a second example of the functional configuration of the deviation angle calculation unit according to the first arrangement.

FIG. 12 is a block diagram illustrating an example of a functional configuration of a coordinate transformation unit according to the first arrangement.

FIG. 13 is a timing chart illustrating an example of a relationship between subframes and corrected frames obtained from point cloud information according to the first arrangement.

FIG. 14 is a diagram illustrating an example of a relationship between subframes and a corrected frame obtained from point cloud information according to the first arrangement.

FIG. 15 is a flowchart illustrating an example of an object detection operation in the information processing device according to the first arrangement.

FIG. 16 is a flowchart illustrating an example of a coordinate transformation operation in the coordinate transformation unit according to the first arrangement.

FIG. 17 is a block diagram illustrating an example of a functional configuration of a control circuit of an information processing device according to a second arrangement.

FIG. 18 is a timing chart illustrating an example of a relationship between subframes, corrected frames, and interpolated frames obtained from point cloud information according to the second arrangement.

FIG. 19 is a flowchart illustrating an example of an object detection operation in the information processing device according to the second arrangement.

FIG. 20 is a block diagram illustrating an example of a functional configuration of a control circuit of an information processing device according to a third arrangement.

FIG. 21 is a timing chart illustrating an example of a relationship between subframes, corrected frames, and a superimposed frame obtained from point cloud information according to the third arrangement.

FIG. 22 is a flowchart illustrating an example of an object detection operation in the information processing device according to the third arrangement.

FIG. 23 is a flowchart illustrating an example of an object detection operation in an information processing device according to a first modification.

FIG. 24 is a block diagram illustrating an example of a functional configuration of an information processing device and an object detection device according to a second modification.

DETAILED DESCRIPTION

In general, according to one arrangement, an information processing device includes: a first calculation unit configured to calculate a velocity of a moving object and an angle of change in a traveling direction of the moving object based on position information indicating a position of the moving object; a second calculation unit configured to calculate, based on point cloud information measured in a first coordinate system fixed to the moving object, a deviation angle between a second coordinate system fixed to the moving object and having an axis along the traveling direction and the first coordinate system; and a transformation unit configured to transform first point cloud information measured at a first time from the first coordinate system at the first time to the first coordinate system at a second time based on the velocity, the angle of change, and the deviation angle.

Hereinafter, arrangements will be described with reference to the drawings.

In the following description, components having the same functions and configurations are denoted by the same reference signs. In a case where elements having similar configurations are particularly distinguished from each other, different characters or numbers may be added to the end of the same reference sign.

1. First Arrangement

1.1 Configuration

1.1.1 Information Processing System

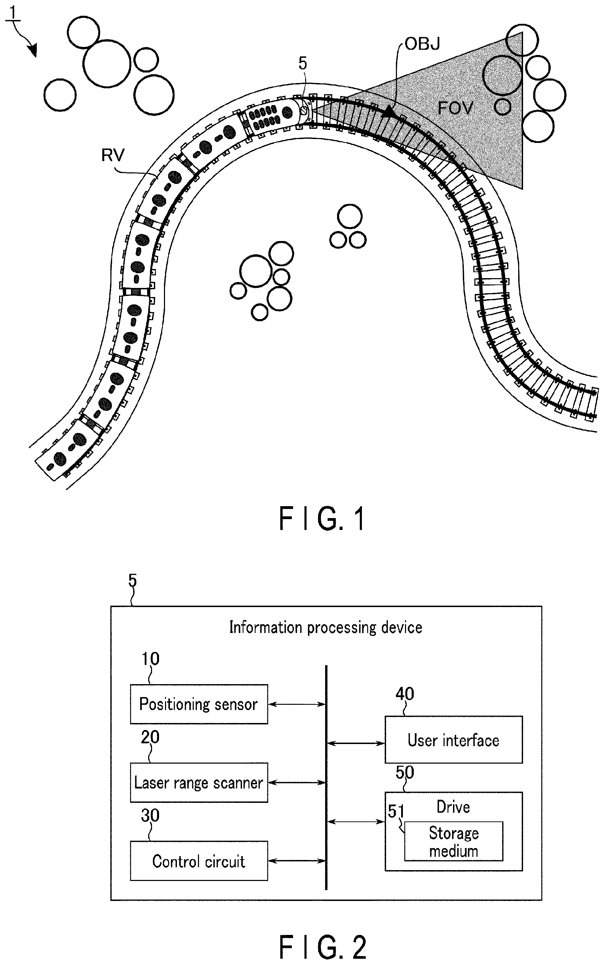

FIG. 1 is a diagram illustrating an example of a configuration of an information processing system according to a first arrangement. The information processing system 1 includes a moving object RV. The moving object RV is, for example, a railway vehicle traveling along a railway track. The moving object RV is not limited to a railway vehicle, and may be an automobile traveling along a road or a flying object. An information processing device 5 is mounted on the moving object RV.

The information processing device 5 is a device for supporting driving of the moving object RV by a driver. For example, the information processing device 5 has a function of notifying, in real time, the driver of the presence of an object OBJ included in a predetermined field of view FOV in a case where the front side of the moving object RV is viewed from the head of the moving object RV. Examples of the object OBJ include a railway track provided along the traveling direction of the moving object RV, an overhead line pole, a railway sign, an obstacle placed on the railway track, and the like. The information processing device 5 can function more suitably in a case where the information processing device 5 is mounted on a railway vehicle.

1.1.2 Information Processing Device

FIG. 2 is a block diagram illustrating an example of a hardware configuration of the information processing device according to the first arrangement. The information processing device 5 includes a positioning sensor 10, a laser range scanner 20, a control circuit 30, a user interface 40, and a drive 50. A storage medium 51 is mounted on the drive 50.

The positioning sensor 10 is a global navigation satellite system (GNSS) receiver or an inertial measurement unit (IMU). The positioning sensor 10 generates position information of a predetermined point fixed to the moving object RV in the Earth-fixed coordinate system. In a case where the positioning sensor 10 is a GNSS receiver, the position information is a history of a position associated with a positioning time. In a case where the positioning sensor 10 is an IMU, the position information is a history of an angular velocity and acceleration associated with a positioning time. The frequency at which the position information is measured by the positioning sensor 10 is, for example, 1 (time/second) or higher and 10 (times/second) or lower. The positioning sensor 10 transmits the generated position information to the control circuit 30. Hereinafter, the Earth-fixed coordinate system used for the position information is also referred to as a global coordinate system.

The laser range scanner 20 is a light detection and ranging (LiDAR) scanner. The laser range scanner 20 generates point cloud information regarding the object OBJ included in the field of view FOV using laser light. The point cloud information is a set of coordinates represented in a three-dimensional orthogonal coordinate system fixed to the moving object RV. The frequency at which the point cloud information is measured by the laser range scanner 20 is higher than the frequency at which the position information is measured by the positioning sensor 10. For example, the frequency at which the point cloud information is measured by the laser range scanner 20 is about 30 (times/second). The laser range scanner 20 transmits the generated point cloud information to the control circuit 30. Hereinafter, a coordinate system used for point cloud information is also referred to as a LiDAR coordinate system. Details of the LiDAR coordinate system will be described later.

The control circuit 30 includes a central processing unit (CPU), a random access memory (RAM), a read only memory (ROM), and the like. The ROM of the control circuit 30 stores programs and the like used for an object detection operation of the information processing device 5. The CPU of the control circuit 30 controls the entire information processing device 5 according to a program stored in the ROM of the control circuit 30. The RAM of the control circuit 30 is used as a work area of the CPU of the control circuit 30. Specifically, the control circuit 30 generates information regarding the object OBJ included in the field of view FOV of the moving object RV as a detection result based on the position information and the point cloud information.

The user interface 40 is an interface device for outputting the detection result generated by the control circuit 30 to a user (for example, the driver of the moving object RV) of the information processing device 5. The user interface 40 includes, for example, a liquid crystal display (LCD) or an electroluminescence (EL) display.

The drive 50 is a device for reading software stored in the storage medium 51. The drive 50 includes, for example, a compact disc (CD) drive, a digital versatile disc (DVD) drive, or the like. The storage medium 51 is a medium that stores software by electrical, magnetic, optical, mechanical, or chemical action.

1.1.3 Laser Range Scanner

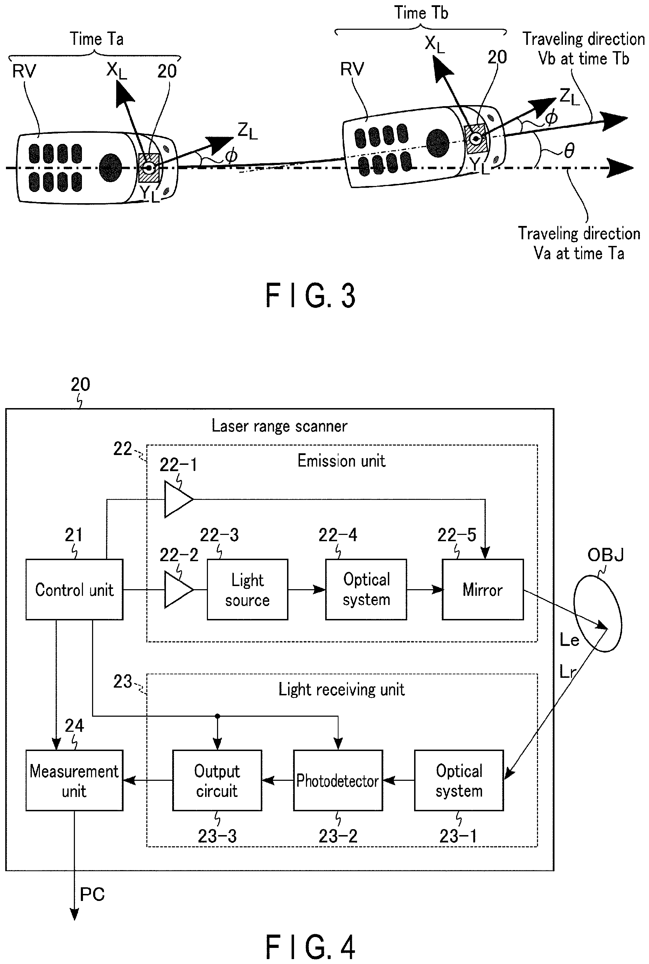

FIG. 3 is a diagram illustrating an example of a relationship between a traveling direction of the moving object and the LiDAR coordinate system according to the first arrangement. FIG. 3 illustrates a traveling direction Va of the moving object RV at a time Ta and a traveling direction Vb of the moving object RV at a time Tb. FIG. 3 illustrates the moving object RV, and the laser range scanner 20 and the LiDAR coordinate system fixed to the moving object RV for each of the times Ta and Tb. The LiDAR coordinate system is illustrated as a right-handed system defined by an $X_L$ direction, a $Y_L$ direction, and a $Z_L$ direction orthogonal to each other.

As illustrated in FIG. 3, the origin of the LiDAR coordinate system is fixed to the moving object RV. Therefore, the origin of the LiDAR coordinate system at the time Tb translates from the origin of the LiDAR coordinate system at the time Ta by a distance that the moving object RV travels.

The LiDAR coordinate system rotates in accordance with a change in the traveling direction of the moving object RV. That is, when the traveling direction Vb at the time Tb is rotated by an angle $\theta$ with respect to the traveling direction Va at the time Ta, the LiDAR coordinate system also rotates by the angle $\theta$ in accordance with the rotation of the moving object RV. Hereinafter, the angle $\theta$ is also referred to as an angle $\theta$ of change in the traveling direction.

Note that the LiDAR coordinate system has an axis along the traveling direction of the moving object RV and is fixed to a moving object coordinate system (not illustrated) whose origin matches that of the LiDAR coordinate system. Specifically, the LiDAR coordinate system is fixed in a direction rotated by an angle $\varphi$ with respect to the moving object coordinate system. Therefore, both an angle formed by the traveling direction Va of the moving object RV at the time Ta and the $Z_L$ direction at the time Ta and an angle formed by the traveling direction Vb of the moving object RV at the time Tb and the $Z_L$ direction at the time Tb are an angle $\varphi$ and do not change. The angle $\varphi$ is caused by a deviation (misalignment) of the laser range scanner 20 attached to the moving object RV. Hereinafter, the angle $\varphi$ is also referred to as a deviation angle $\varphi$.

FIG. 4 is a block diagram illustrating an example of a hardware configuration of the laser range scanner according to the first arrangement. The laser range scanner 20 includes a control unit 21, an emission unit 22, a light receiving unit 23, and a measurement unit 24.

The control unit 21 is a circuit that entirely controls the operation of the laser range scanner 20. The control unit 21 includes, for example, an oscillator. The oscillator is used for generating intermittent pulse signals.

The emission unit 22 intermittently generates and emits laser light. The emitted laser light is applied to the object OBJ and is used for measuring a distance between the laser range scanner 20 and the object OBJ. Hereinafter, the laser light emitted from the emission unit 22 is also referred to as "emitted light Le". The emitted light Le reflected by the object OBJ is also referred to as "reflected light Lr". The emission unit 22 includes, for example, drive circuits 22-1 and 22-2, a light source 22-3, an optical system 22-4, and a mirror 22-5.

The drive circuit 22-1 generates an intermittent drive current according to a pulse signal input from the oscillator of the control unit 21. The drive circuit 22-1 supplies the generated intermittent drive current to the light source 22-3. That is, the drive circuit 22-1 functions as a current supply source of the light source 22-3.

The drive circuit 22-2 generates a drive current in accordance with control by the control unit 21. The drive circuit 22-2 supplies the generated drive current to the mirror 22-5. That is, the drive circuit 22-2 functions as a power supply circuit of the mirror 22-5.

The light source 22-3 is a laser light source such as a laser diode. The light source 22-3 intermittently emits laser light (emitted light Le) based on the intermittent drive current supplied from the drive circuit 22-1. The emitted light Le is incident on the optical system 22-4.

The optical system 22-4 includes a plurality of lenses and an optical element. The optical system 22-4 may include a beam shaper, a beam splitter, and the like. In the optical system 22-4, the emitted light Le from the light source 22-3 is arranged on an optical path. The optical system 22-4 collimates the emitted light Le and guides the collimated light to the mirror 22-5.

The mirror 22-5 is, for example, a polygon mirror. The mirror 22-5 reflects the emitted light Le guided by the optical system 22-4 based on the drive current supplied from the drive circuit 22-2. The mirror 22-5 is configured to rotate about a rotation axis. The object OBJ is irradiated with the emitted light Le reflected by the mirror 25.

The light receiving unit 23 converts the light incident on the laser range scanner 20 into an electric signal. The light receiving unit 23 transfers the converted electric signal to the measurement unit 24 as a light reception result. The light receiving unit 23 is used to detect the reflected light Lr intermittently incident on the laser range scanner 20. The light receiving unit 23 includes, for example, an optical system 23-1, a photodetector 23-2, and an output circuit 23-3.

The optical system 23-1 includes at least one lens. The optical system 23-1 condenses the reflected light Lr incident on the laser range scanner 20 onto the photodetector 23-2.

The photodetector 23-2 is, for example, a photomultiplier (semiconductor photon-multiplier, particularly a silicon photon-multiplier (SiPM)) that can be integrated on a semiconductor substrate. The photodetector 23-2 includes a photomultiplier element using a semiconductor. As the photomultiplier element, for example, a single-photon avalanche diode (SPAD) is used. The photodetector 23-2 converts the reflected light Lr condensed by the optical system 23-1 into an electric signal using the photomultiplier element. The electrical signal converted by the photodetector 23-2 is transferred to the output circuit 23-3.

The output circuit 23-3 converts the electric signal transferred from the photodetector 23-2 into a digital signal, and outputs the digital signal corresponding to the light reception result to the measurement unit 24.

The measurement unit 24 measures, based on the light reception result transferred from the light receiving unit 23, the time when the light receiving unit 23 detects the reflected light Lr. The measurement unit 24 measures the distance between the laser range scanner 20 and the object OBJ based on the time when the emitted light Le is emitted from the emission unit 22 and the time when the light receiving unit 23 detects the reflected light Lr. The time when the emitted light Le is emitted from the emission unit 22 is notified from the control unit 21, for example. The measurement unit 24 generates point cloud information PC based on the measured distance, and transmits the point cloud information PC to the control circuit 30.

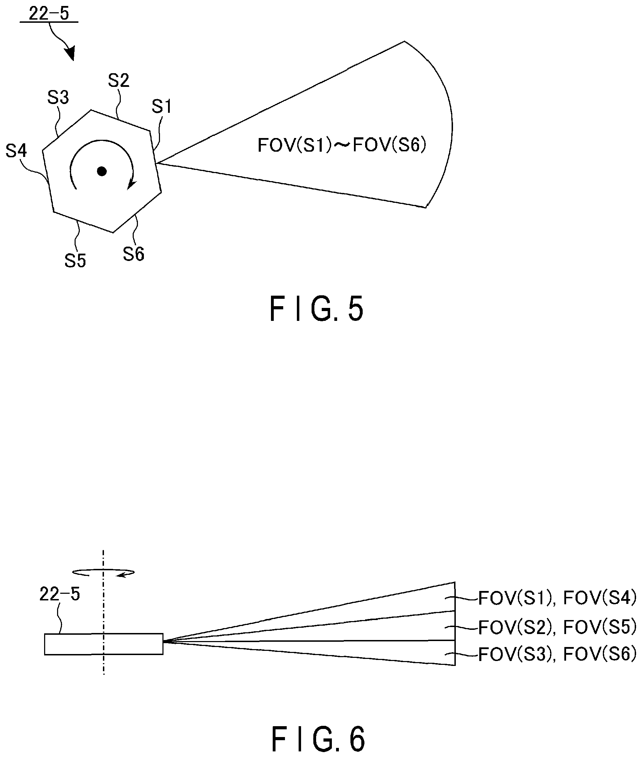

FIG. 5 is a plan view illustrating an example of a relationship between the mirror mounted on the laser range scanner and the field of view of the laser range scanner according to the first arrangement. FIG. 5 illustrates a relationship between a reflective surface of the mirror 22-5 and the field of view FOV as viewed in the rotation axis direction of the mirror 22-5.

The mirror 22-5 has, for example, a plurality of reflective surfaces. The example of FIG. 5 shows a case where the mirror 22-5 has six reflective surfaces S1 to S6. The plurality of reflective surfaces S1 to S6 are provided at positions corresponding to sides of a regular hexagon centered on the rotation axis. More specifically, the mirror 22-5 reflects the laser light in the order of the reflective surfaces S1, S2, S3, S4, S5, S6, S1, ... according to the rotation. As a result, fields of view FOV(S1) to FOV(S6) corresponding to the reflective surfaces S1 to S6, respectively, can be distributed in the same region as viewed in the rotation axis direction.

FIG. 6 is a side view illustrating an example of a relationship between the mirror mounted on the laser range scanner and the field of view of the laser range scanner according to the first arrangement. FIG. 6 illustrates the relationship between the reflective surfaces of the mirror 22-5 and the fields of view FOV as viewed in a direction intersecting the rotation axis direction of the mirror 22-5.

The field of view FOV(SL) corresponding to the reflective surface S1 and the field of view FOV(S4) corresponding to the reflective surface S4 are located at the same height in the rotation axis direction. The field of view FOV(S2) corresponding to the reflective surface S2 and the field of view FOV(S5) corresponding to the reflective surface S5 are located at the same height in the rotation axis direction. The field of view FOV(S3) corresponding to the reflective surface S3 and the field of view FOV(S6) corresponding to the reflective surface S6 are located at the same height in the rotation axis direction.

The fields of view FOV (S1) and FOV(S4) are at higher positions in the rotation axis direction than the fields of view FOV(S2) and FOV(S5). The fields of view FOV(S3) and FOV(S6) are at lower positions in the rotation axis direction than the fields of view FOV(S2) and FOV(S5).

The laser range scanner 20 generates point cloud information PC every time one of the fields of view FOV(S1) to FOV(S6) is scanned using one reflective surface. Then, the laser range scanner 20 can generate three pieces of point cloud information PC corresponding to the entire region of the field of view FOV by rotating the mirror 22-5 a half turn. For example, in a case where the number of reflective surfaces is 6, when the mirror 22-5 is rotated 5 times per second, the point cloud information PC can be measured at a frequency of 30 times/second.

In the following description, an image obtained based on three pieces of point cloud information PC corresponding to the entire region of the field of view FOV is also referred to as a frame F. Furthermore, an image obtained based on one piece of point cloud information PC corresponding to any one of the fields of view FOV(S1) to FOV(S6) is also referred to as a subframe SF. More specifically, an image obtained based on point cloud information PC(S1) corresponding to the field of view FOV(SL) or point cloud information PC(S4) corresponding to the field of view FOV(S4) is also referred to as a subframe SFup. An image obtained based on point cloud information PC(S2) corresponding to the field of view FOV(S2) or point cloud information PC(S5) corresponding to the field of view FOV(S5) is also referred to as a subframe SFmid. An image obtained based on point cloud information PC(S3) corresponding to the field of view FOV(S3) or point cloud information PC(S6) corresponding to the field of view FOV(S6) is also referred to as a subframe SFlow.

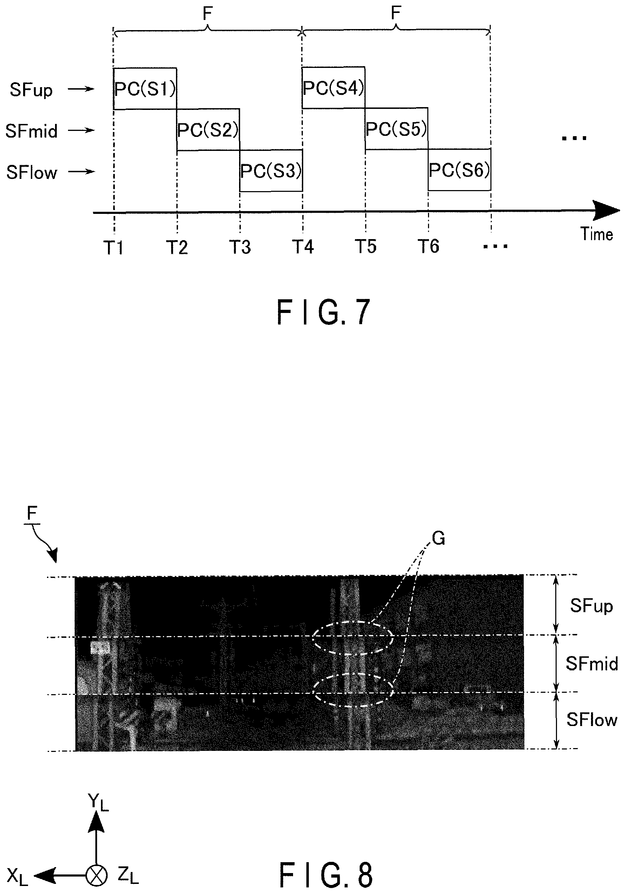

FIG. 7 is a timing chart illustrating an example of a relationship between subframes and frames obtained from point cloud information according to the first arrangement. In FIG. 7, the order in which the point cloud information PC(S1) to PC(S6) is measured is illustrated in time series. That is, times T1 to T6 are measurement times of the point cloud information PC(S1) to PC(S6), respectively.

FIG. 8 is a diagram illustrating an example of a relationship between the subframes and a frame obtained from point cloud information according to the first arrangement. FIG. 8 illustrates a frame F generated from the subframe SFup based on the point cloud information PC(S1), the subframe SFmid based on the point cloud information PC(S2), and the subframe SFlow based on the point cloud information PC(S3).

As illustrated in FIG. 7, the measurement time T1 of the point cloud information PC(S1), the measurement time T2 of the point cloud information PC(S2), and the measurement time T3 of the point cloud information PC(S3) are different from each other. As a result, the point cloud information PC(S1), PC(S2), and PC(S3) are expressed in LiDAR coordinate systems having different origins and directions from each other although forming the same frame F. Therefore, as illustrated in FIG. 8, in the same frame F, significant positional deviation G (offset) may occur between the subframe SFup and the subframe SFmid and between the subframe SFmid and the subframe SFlow.

The positional deviation G is not preferable because there is a possibility that the accuracy of detecting the object OBJ is lowered. Therefore, the control circuit 30 of the information processing device 5 is configured to correct the point cloud information PC acquired from the laser range scanner 20 so as to suppress the positional deviation G between the subframes SF.

1.1.4 Control Circuit

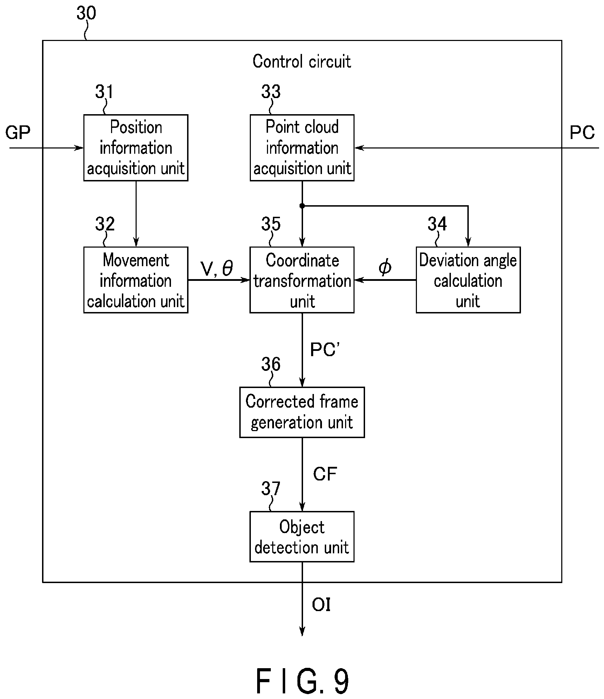

FIG. 9 is a block diagram illustrating an example of a functional configuration of the control circuit of the information processing device according to the first arrangement.

The CPU of the control circuit 30 loads the program stored in the ROM of the control circuit 30 or the storage medium 51 into the RAM. Then, the CPU of the control circuit 30 interprets and executes the program loaded in the RAM. As a result, the control circuit 30 functions as a computer including a position information acquisition unit 31, a movement information calculation unit 32, a point cloud information acquisition unit 33, a deviation angle calculation unit 34, a coordinate transformation unit 35, a corrected frame generation unit 36, and an object detection unit 37.

The position information acquisition unit 31 acquires position information GP from the positioning sensor 10. The position information acquisition unit 31 transmits the acquired position information GP to the movement information calculation unit 32.

The movement information calculation unit 32 calculates the velocity V of the moving object RV and the angle $\theta$ of change associated with the measurement time of the point cloud information PC based on the position information GP. The movement information calculation unit 32 transmits the calculated velocity V and the calculated angle $\theta$ of change to the coordinate transformation unit 35.

Specifically, for example, in a case where the position information GP includes position coordinates P1 and P2, the movement information calculation unit 32 calculates a value obtained by dividing a distance between the position coordinates P1 and P2 by the difference in positioning time between the position coordinates P1 and P2 as the velocity V at the positioning time of the position coordinates P1. In addition, for example, in a case where the position information GP includes position coordinates P1, P2, and P3, the movement information calculation unit 32 calculates an angle formed by a vector extending from the position coordinates P1 as a start point to the position coordinates P2 as an end point and a vector extending from the position coordinates P2 as a start point to the position coordinates P3 as an end point as the angle θ of change in a period from the positioning time of the position coordinates P1 to the positioning time of the position coordinates P2. The angle θ of change is calculated as, for example, a Euler angle (θx, θy, θz) in the moving object coordinate system.

In a case where a time associated with the velocity V and the angle θ of change calculated by the above-described method is different from the measurement time of the point cloud information PC, the movement information calculation unit 32 may calculate the velocity V and the angle θ of change associated with the measurement time of the point cloud information PC by interpolation or extrapolation.

The point cloud information acquisition unit 33 acquires the point cloud information PC from the laser range scanner 20. The point cloud information acquisition unit 33 transmits the acquired point cloud information PC to the deviation angle calculation unit 34 and the coordinate transformation unit 35.

The deviation angle calculation unit 34 calculates the deviation angle φ based on the point cloud information PC. The deviation angle calculation unit 34 transmits the calculated deviation angle φ to the coordinate transformation unit 35.

Examples of a method of calculating the deviation angle φ include the following first example and second example.

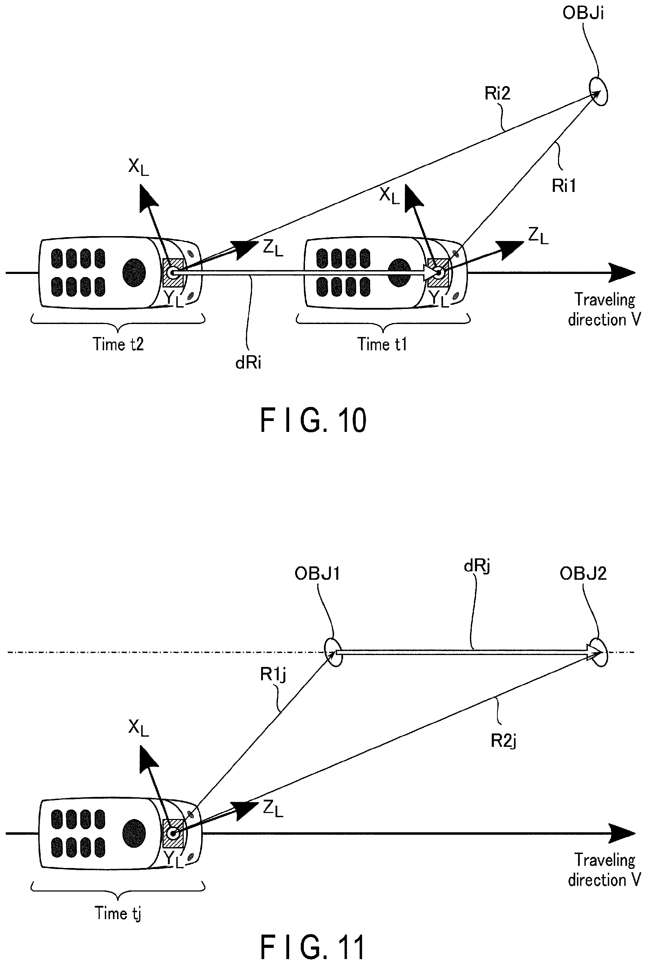

FIG. 10 is a diagram illustrating a first example of a functional configuration of the deviation angle calculation unit according to the first arrangement. The first example corresponds to a case where the deviation angle φ is calculated while the moving object RV travels straight. FIG. 10 illustrates an object OBJi, the moving object RV and the laser range scanner 20 at each of times t1 and t2 during straight traveling, and the LiDAR coordinate system.

In the first example, the deviation angle calculation unit 34 extracts coordinate values corresponding to the common object OBJi from a plurality of pieces of point cloud information PC received while the moving object RV travels straight. Examples of the object OBJi include a railway track, an overhead line pole, a railway sign, and the like. In the example illustrated in FIG. 10, the deviation angle calculation unit 34 extracts coordinate values Ri1 = (Xi1, Yi1, Zi1) measured at the time t1 for the object OBJi and coordinate values Ri2 = (Xi2, Yi2, Zi2) measured at the time t2 for the object OBJi. Here, the coordinate values Ri1 and Ri2 are coordinate values in the LiDAR coordinate system. Based on the extracted coordinate values Ri1 and Ri2, the deviation angle calculation unit 34 calculates a deviation angle φi for the object OBJi according to the following Equations (1) to (3).

$$dR_i = \begin{pmatrix} dX_i \\ dY_i \\ dZ_i \end{pmatrix} = \begin{pmatrix} X_{i2} - X_{i1} \\ Y_{i2} - Y_{i1} \\ Z_{i2} - Z_{i1} \end{pmatrix} \qquad \cdots (1)$$

$$D_i = \sqrt{dX_i{}^2 + dY_i{}^2 + dZ_i{}^2} \qquad \cdots (2)$$

$$\phi_i = \begin{pmatrix} \phi x_i \\ \phi y_i \\ \phi z_i \end{pmatrix} = \begin{pmatrix} arccos\left(dZ_i/D_i\right) \\ arccos\left(dX_i/D_i\right) \\ arccos\left(dY_i/D_i\right) \end{pmatrix} \qquad \cdots (3)$$

The deviation angle calculation unit 34 similarly calculates deviation angles φi for N different objects OBJi, and calculates the deviation angle φ according to the following Equation (4).

$$\phi = \begin{pmatrix} \phi x \\ \phi y \\ \phi z \end{pmatrix} = \frac{1}{N}\sum_{i=1}^{N} \begin{pmatrix} \phi x_i \\ \phi y_i \\ \phi z_i \end{pmatrix} \qquad \cdots (4)$$

FIG. 11 is a diagram illustrating a second example of the functional configuration of the deviation angle calculation unit according to the first arrangement. The second example corresponds to a case where the deviation angle φ is calculated while the moving object RV is stationary. FIG. 11 illustrates objects OBJ1 and OBJ2, the moving object RV and the laser range scanner 20 at a time tj while the moving object RV is stationary, and the LiDAR coordinate system.

In the second example, the deviation angle calculation unit 34 extracts coordinate values corresponding to the two objects OBJ1 and OBJ2 from point cloud information PC received while the moving object RV is stationary. Examples of the objects OBJ1 and OBJ2 include a railway track, an overhead line pole, a railway sign, and the like. In the example illustrated in FIG. 11, the deviation angle calculation unit 34 extracts coordinate values R1j = (X1j, Y1j, Z1j) measured at the time tj for the object OBJ1 and coordinate values R2j = (X2j, Y2j, Z2j) measured at the time tj for the object OBJ2. In this case, the coordinate values R1j and R2j are coordinate values in the LiDAR coordinate system. Based on the extracted coordinate values R1j and R2j, the deviation angle calculation unit 34 calculates a deviation angle φj with respect to the time tj according to the following Equations (5) to (7).

$$dR_j = \begin{pmatrix} dX_j \\ dY_j \\ dZ_j \end{pmatrix} = \begin{pmatrix} X_{2j} - X_{1j} \\ Y_{2j} - Y_{1j} \\ Z_{2j} - Z_{1j} \end{pmatrix} \qquad \cdots (5)$$

$$D_j = \sqrt{dX_j{}^2 + dY_j{}^2 + dZ_j{}^2} \qquad \cdots (6)$$

$$\phi_j = \begin{pmatrix} \phi x_j \\ \phi y_j \\ \phi z_j \end{pmatrix} = \begin{pmatrix} arccos\left(dZ_j/D_j\right) \\ arccos\left(dX_j/D_j\right) \\ arccos\left(dY_j/D_j\right) \end{pmatrix} \qquad \cdots (7)$$

The deviation angle calculation unit 34 similarly calculates deviation angles φj for N different times tj, and calculates the deviation angle φ according to the following Equation (8).

$$\phi = \begin{pmatrix} \phi x \\ \phi y \\ \phi z \end{pmatrix} = \frac{1}{N} \sum_{j=1}^{N} \begin{pmatrix} \phi x_j \\ \phi y_j \\ \phi z_j \end{pmatrix} \qquad \cdots (8)$$

In the first example, a three-dimensional rotation matrix $R_3(\varphi)$ functions as a transformation matrix between a vector dRi = (dXi, dYi, dZi) and a vector (0, 0, Di). In the second example, the three-dimensional rotation matrix $R_3(\varphi)$ functions as a transformation matrix between a vector dRj = (dXj, dYj, dZj) and a vector (0, 0, Dj). That is, the three-dimensional rotation matrix $R_3(\varphi)$ functions as a coordinate transformation matrix between the LiDAR coordinate system and the moving object coordinate system. Note that the three-dimensional rotation matrix $R_3(\varphi)$ is a rotation matrix expressed by the following Equation (9).

$$R_3(\phi_x, \phi_y, \phi_z) =$$

$$\begin{bmatrix} \cos(\phi_z) & \sin(\phi_z) & 0 \\ -\sin(\phi_z) & \cos(\phi_z) & 0 \\ 0 & 0 & 1 \end{bmatrix} \begin{bmatrix} \cos(\phi_y) & 0 & \sin(\phi_y) \\ 0 & 1 & 0 \\ -\sin(\phi_y) & 0 & \cos(\phi_y) \end{bmatrix} \begin{bmatrix} 1 & 0 & 0 \\ 0 & \cos(\phi_x) & \sin(\phi_x) \\ 0 & -\sin(\phi_x) & \cos(\phi_x) \end{bmatrix} \cdots (9)$$

The coordinate transformation unit 35 transforms the coordinate system of the point cloud information PC based on the velocity V, the angle θ of change, and the deviation angle φ. More specifically, the coordinate transformation unit 35 performs a coordinate transformation operation of transforming a coordinate system of point cloud information PC associated with a certain measurement time from the LiDAR coordinate system at the certain measurement time to the LiDAR coordinate system at another measurement time. The coordinate transformation unit 35 generates point cloud information PC' as a result of the coordinate transformation operation. The coordinate transformation unit 35 transmits the generated point cloud information PC' to the corrected frame generation unit 36. Hereinafter, the measurement time corresponding to the LiDAR coordinate system after the transformation in the coordinate transformation operation is also referred to as a target time.

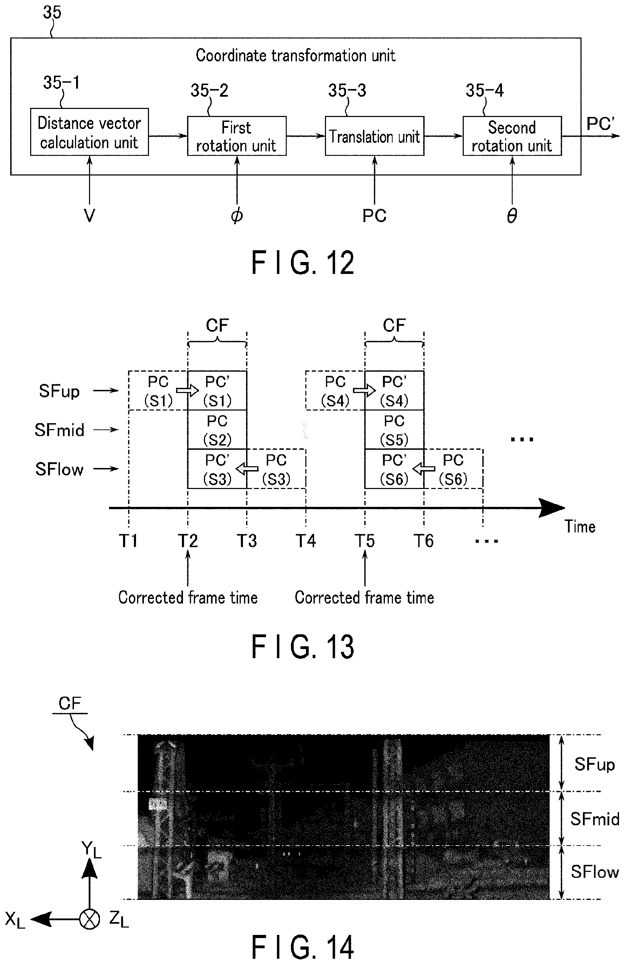

FIG. 12 is a block diagram illustrating an example of a functional configuration of the coordinate transformation unit according to the first arrangement. As illustrated in FIG. 12, the coordinate transformation unit 35 includes a distance vector calculation unit 35-1, a first rotation unit 35-2, a translation unit 35-3, and a second rotation unit 35-4.

Hereinafter, for convenience of description, it is assumed that measurement times of the point cloud information PC(S1), PC(S2), and PC(S3) corresponding to the subframes SFup, SFmid, and SFlow are times T1, T2 (= T1 + ΔT), and T3 (= T2 + ΔT), respectively, and the target time among them is the time T2. In addition, it is assumed that the velocity V and the angle θ of change are constant from the time T1 to the time T3.

The distance vector calculation unit 35-1 generates a distance vector of the moving object coordinate system based on the velocity V. Specifically, the distance vector calculation unit 35-1 calculates a distance $D_{12}$ from the moving object RV at the time T1 to the moving object RV at the time T2, and generates a distance vector $PD_{12} = (0, 0, D_{12})$ in the moving object coordinate system at the time T1. The distance vector calculation unit 35-1 calculates a distance $D_{32}$ from the moving object RV at the time T3 to the moving object RV at the time T2, and generates a distance vector $PD_{32} = (0, 0, -D_{32})$ in the moving object coordinate system at the time T3. Under the above conditions, for example, the distances $D_{12}$ and $D_{32}$ can be regarded as equal to VΔT. The distance vector calculation unit 35-1 transmits the generated distance vectors $PD_{12}$ and $PD_{32}$ in the moving object coordinate system to the first rotation unit 35-2.

The first rotation unit 35-2 transforms the coordinate system of the distance vectors $PD_{12}$ and $PD_{32}$ from the moving object coordinate system to the LiDAR coordinate system based on the deviation angle φ. Specifically, the first rotation unit 35-2 calculates the distance vector $PD_{12}$ of the LiDAR coordinate system at the time T1 by rotating the distance vector $PD_{12}$ of the moving object coordinate system at the time T1 using the three-dimensional rotation matrix $R_3(\varphi)$ according to the following Equation (10). Specifically, the first rotation unit 35-2 calculates the distance vector $PD_{32}$ of the LiDAR coordinate system at the time T3 by rotating the distance vector $PD_{32}$ of the moving object coordinate system at the time T3 using the three-dimensional rotation matrix $R_3(\varphi)$ according to the following Equation (11). The first rotation unit 35-2

transmits the calculated distance vectors $PD_{12}$ and $PD_{32}$ of the LiDAR coordinate system to the translation unit 35-3.

$$PD_{12} = R_3\left(\phi_x, \phi_y, \phi_z\right)\begin{bmatrix} 0 \\ 0 \\ d_{12} \end{bmatrix} \qquad \cdots (1\,0)$$

$$PD_{32} = R_3\left(\phi_x, \phi_y, \phi_z\right)\begin{bmatrix} 0 \\ 0 \\ -d_{32} \end{bmatrix} \qquad \cdots (1\,1)$$

The translation unit 35-3 translates the point cloud information PC based on the distance vectors $PD_{12}$ and $PD_{32}$ transformed into the LiDAR coordinate system. Specifically, the translation unit 35-3 adds the distance vector $PD_{12}$ of the LiDAR coordinate system to coordinate values (x1, y1, z1) of the point cloud information PC(S1). The translation unit 35-3 adds the distance vector $PD_{32}$ of the LiDAR coordinate system to coordinate values (x3, y3, z3) of the point cloud information PC (S3). The translation unit 35-3 transmits the point cloud information PC after the translation to the second rotation unit 35-4.

Based on the angle θ of change, the second rotation unit 35-4 transforms the coordinate system of the point cloud information PC translated by the translation unit 35-3 from the LiDAR coordinate system at the measurement time to the LiDAR coordinate system at the target time. Specifically, the second rotation unit 35-4 calculates point cloud information PC'(S1) including the coordinate values of the LiDAR coordinate system at the time T2 by rotating the coordinate values of the LiDAR coordinate system at the time T1 using the three-dimensional rotation matrix $R_3(\theta)$ according to the following Equation (12). Specifically, the second rotation unit 35-4 calculates point cloud information PC'(S3) including the coordinate values of the LiDAR coordinate system at the time T2 by rotating the coordinate values of the LiDAR coordinate system at the time T3 using a three-dimensional rotation matrix $R_3(-\theta)$ according to the following Equation (13). The second rotation unit 35-4 transmits the generated point cloud information PC'(S1) and PC'(S3) to the corrected frame generation unit 36 together with the point cloud information PC(S2).

$$\begin{bmatrix} x'_1 \\ y'_1 \\ z'_1 \end{bmatrix} = R_3(\theta_x, \theta_y, \theta_z)\left(\begin{bmatrix} x_1 \\ y_1 \\ z_1 \end{bmatrix} + PD_{12}\right) \qquad \cdots (12)$$

$$\begin{bmatrix} x'_3 \\ y'_3 \\ z'_3 \end{bmatrix} = R_3(-\theta_x, -\theta_y, -\theta_z)\left(\begin{bmatrix} x_3 \\ y_3 \\ z_3 \end{bmatrix} + PD_{32}\right) \qquad \cdots (13)$$

In this case, (x1', y1', z1') is coordinate values of the point cloud information PC'(S1). In this case, (x3', y3', z3') is coordinate values of the point cloud information PC'(S3).

Since the most dominant angle θ of change in the traveling direction of the moving object RV is a yaw direction, other rotation components may be ignored. In this case, Equations (12) and (13) can be simplified as Equations (14) and (15) shown below, respectively.

$$\begin{bmatrix} x'_1 \\ z'_1 \end{bmatrix} = R_2(\theta_x, \theta_z)\left(\begin{bmatrix} x_1 \\ z_1 \end{bmatrix} + R_2(\phi_x, \phi_z)\begin{bmatrix} 0 \\ d_{12} \end{bmatrix}\right) \qquad \cdots (14)$$

$$\begin{bmatrix} x'_3 \\ z'_3 \end{bmatrix} = R_2(-\theta_x, -\theta_z)\left(\begin{bmatrix} x_3 \\ z_3 \end{bmatrix} + R_2(\phi_x, \phi_z)\begin{bmatrix} 0 \\ -d_{32} \end{bmatrix}\right) \qquad \cdots (15)$$

The corrected frame generation unit 36 generates a corrected frame CF based on the point cloud information PC'(S1), PC(S2), and PC'(S3). The corrected frame generation unit 36 transmits the corrected frame CF to the object detection unit 37.

FIG. 13 is a timing chart illustrating an example of a relationship between subframes and corrected frames obtained from point cloud information according to the first arrangement. FIG. 14 is a diagram illustrating an example of a relationship between subframes and a corrected frame obtained from point cloud information according to the first arrangement. FIGS. 13 and 14 correspond to FIGS. 7 and 8, respectively. In FIG. 13, times T2 and T5, which are target times for corrected frames CF, are indicated as corrected frame times.

As illustrated in FIG. 13, the measurement time T1 of the point cloud information PC'(S1), the measurement time T2 of the point cloud information PC(S2), and the measurement time T3 of the point cloud information PC(S3) are different from each other. However, by the coordinate transformation processing in the coordinate transformation unit 35, the point cloud information PC'(S1) and the point cloud information PC'(S3) are expressed in a LiDAR coordinate system having the same origin and direction as the point cloud information PC(S2). Therefore, as illustrated in FIG. 14, in the same corrected frame CF, positional deviation G between the subframe SFup and the subframe SFmid and between the subframe SFmid and the subframe SFlow is reduced.

The object detection unit 37 detects the object OBJ included in the field of view FOV based on the corrected frame CF. The object detection unit 37 outputs a result OI of detecting the object OBJ to the user via the user interface 40. The object detection unit 37 may output the corrected frame CF to the user in addition to the result OI of detecting the object OBJ.

In a case where a railway track and an obstacle on the railway track are distinguished and detected, first, the object detection unit 37 detects the railway track. Then, the object detection unit 37 determines that the object OBJ detected on the construction limit of the railway track is an obstacle. The object detection unit 37 may detect the object OBJ by further using information such as a camera image (not illustrated) in addition to the corrected frame CF. Furthermore, the object detection unit 37 may obtain the detection result by inputting the above-described information to a deep learning algorithm or the like.

1.2 Operations

Next, operations in the information processing device according to the arrangement will be described.

1.2.1 Object Detection Operation

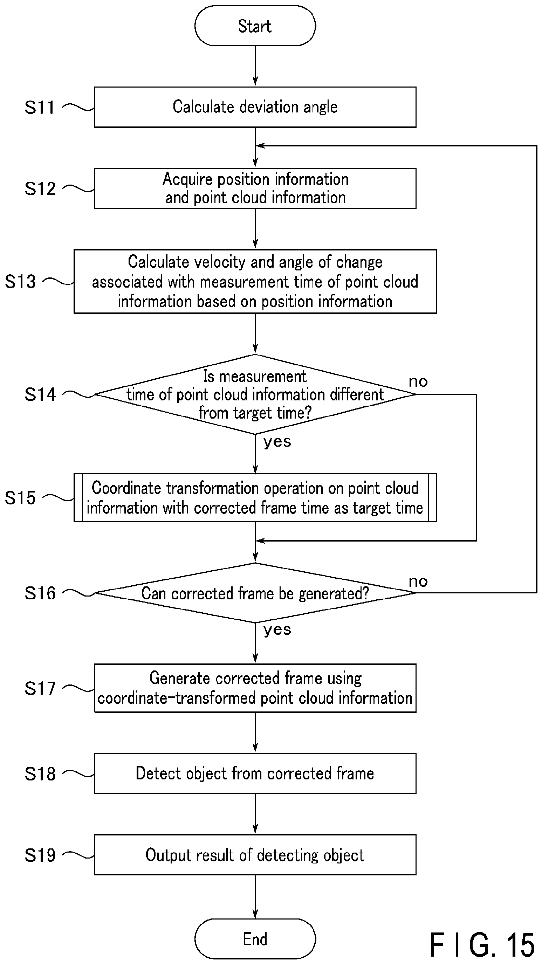

FIG. 15 is a flowchart illustrating an example of the object detection operation in the information processing device according to the first arrangement.

Upon receiving an instruction to start the object detection operation (start), the deviation angle calculation unit 34 calculates the deviation angle $\varphi$ using any one of the first example and the second example described above (S11).

The position information acquisition unit 31 and the point cloud information acquisition unit 33 acquire the position information GP from the positioning sensor 10 and the point cloud information PC from the laser range scanner 20, respectively (S12).

The movement information calculation unit 32 calculates the velocity V and the angle $\theta$ of change associated with the measurement time of the point cloud information PC acquired in the processing of S12 based on the position information GP acquired in the processing of S12 (S13).

The coordinate transformation unit 35 determines whether or not the measurement time of the point cloud information PC acquired in the processing of S12 is different from the target time (S14).

In a case where the measurement time of the point cloud information PC is different from the target time (S14; yes), the coordinate transformation unit 35 performs the coordinate transformation operation on the point cloud information PC acquired in the processing of S12 with the corrected frame time as the target time based on the deviation angle $\varphi$ calculated in the processing of S11 and the velocity V and the angle $\theta$ of change calculated in the processing S13 (S15).

In a case where the measurement time of the point cloud information PC matches the target time (S14; no), or after the processing of S15, the corrected frame generation unit 36 determines whether or not the corrected frame CF can be generated (S16). Whether or not the corrected frame CF can be generated is determined by, for example, determining whether or not all the subframes SF forming the corrected frame CF are prepared.

In a case where the corrected frame generation unit 36 determines that the corrected frame CF cannot be generated (S16; no), the position information acquisition unit 31 and the point cloud information acquisition unit 33 acquire the position information GP from the positioning sensor 10 and the point cloud information PC from the laser range scanner 20, respectively (S12). Then, the control circuit 30 executes subsequent processing of S13 to S16. In this manner, the processing of S12 to S16 is repeated until the corrected frame generation unit 36 determines that the corrected frame CF can be generated.

In a case where the corrected frame generation unit 36 determines that the corrected frame CF can be generated (S16; yes), the corrected frame generation unit 36 generates the corrected frame CF using the point cloud information PC' generated in the processing of S15 (S17).

The object detection unit 37 detects the object OBJ from the corrected frame CF generated in the processing of S17 (S18).

The object detection unit 37 outputs a result of detecting the object OBJ to the user via the user interface 40 (S19).

When the process of S19 ends, the object detection operation ends (end).

1.2.2 Coordinate Transformation Operation

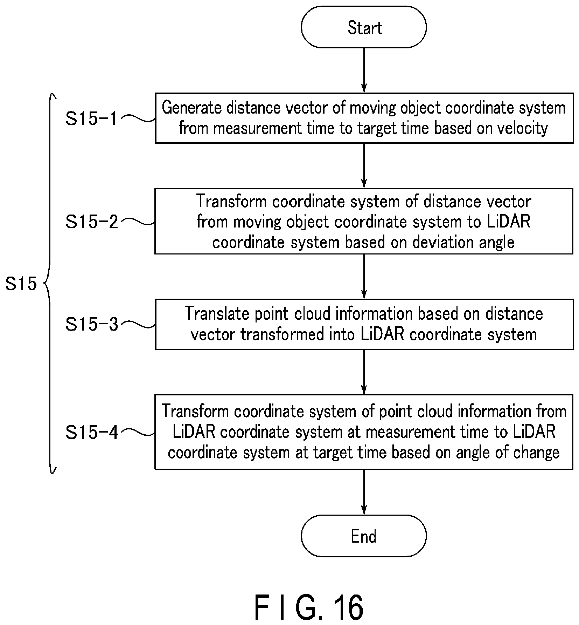

FIG. 16 is a flowchart illustrating an example of the coordinate transformation operation in the information processing device according to the first arrangement. Processing of S15-1 to S15-4 illustrated in FIG. 16 corresponds to the details of the processing in S15 illustrated in FIG. 15.

In a case where the measurement time of the point cloud information PC matches the target time (S14; no) or after the processing of S15 (start), the distance vector calculation unit 35-1 of the coordinate transformation unit 35 generates a distance vector PD of the moving object coordinate system from the measurement time to the target time based on the velocity V calculated in the processing of S13 (S15-1).

The first rotation unit 35-2 transforms the distance vector PD generated in the processing of S15-1 from the moving object coordinate system to the LiDAR coordinate system based on the deviation angle $\varphi$ calculated in the processing of S11 (S15-2).

The translation unit 35-3 translates the point cloud information PC acquired in the processing of S12 based on the distance vector PD transformed into the LiDAR coordinate system in the processing of S15-2 (S15-3).

The second rotation unit 35-4 transforms the point cloud information PC translated in the processing of S15-3 from the LiDAR coordinate system at the measurement time to the LiDAR coordinate system at the target time based on the angle $\theta$ of change calculated in the processing of S13 (S15-4) .

When the processing of S15-4 ends, the coordinate transformation operation ends (end).

1.3 Effects According to First Arrangement

According to the first arrangement, the movement information calculation unit 32 calculates the velocity V of the moving object RV and the angle $\theta$ of change in the traveling direction of the moving object RV based on the position information GP. The deviation angle calculation unit 34 calculates the deviation angle $\varphi$ between the moving object coordinate system and the LiDAR coordinate system based on the point cloud information PC. The coordinate transformation unit 35 transforms the point cloud information PC(S1) from the LiDAR coordinate system at the time T1 to the LiDAR coordinate system at the time T2 based on the velocity V, the angle $\theta$ of change, and the deviation angle $\varphi$. The object detection unit 37 detects the object OBJ around the moving object RV based on the transformed point cloud information PC'(S1). As a result, as described with reference to FIG. 14, the LiDAR coordinate system representing the point cloud information PC'(S1) forming the subframe SFup and the LiDAR coordinate system representing the point cloud information PC(S2) forming the subframe SFmid can be matched with each other. Therefore, the positional deviation G between the subframes SFup and SFmid can be reduced. Therefore, the accuracy of detecting the object can be improved.

In addition, the distance vector calculation unit 35-1 calculates the distance vector $PD_{12}$ indicating a distance traveled by the moving object RV from the time T1 to the time T2 in the moving object coordinate system at the time T1 based on the velocity V. The first rotation unit 35-2 rotates the distance vector $PD_{12}$ in the moving object coordinate system from the moving object coordinate system at the time T1 to the LiDAR coordinate system at the time T1 based on the deviation angle $\varphi$. The translation unit 35-3 translates the point cloud information PC(S1) based on the distance vector $PD_{12}$ represented in the LiDAR coordinate system at the time T1. The second rotation unit 35-4 rotates the translated point cloud information PC(S1) from the LiDAR coordinate system at the time T1 to the LiDAR coordinate system at the time T2 based on the angle $\theta$ of change. As a result, the coordinate transformation unit 35 can obtain the LiDAR coordinate system at the time T2 without the global coordinate system. Therefore, it is possible to suppress an increase in the calculation load as compared with a coordinate transformation operation involving transformation between the global coordinate system and the LiDAR coordinate system.

The velocity V and the angle $\theta$ of change input to the coordinate transformation operation are acquired from the positioning sensor 10. The frequency at which the position information is measured by the positioning sensor 10 is lower than the frequency at which the point cloud information is measured by the laser range scanner 20. Therefore, in order to accurately calculate the velocity V and the angle $\theta$ of change from the position information measured at a low frequency, the amount of a change in the velocity V and the angle $\theta$ of change are preferably small.

Since the railway vehicle travels on a railway track with a gentle change in velocity, the amount of a change in the velocity V is significantly smaller than that of an automobile that is frequently rapidly accelerated and decelerated. In addition, the minimum turning radius of a railway track defined by the standard as about 300 meters is significantly larger than the turning radius of a road where a place with a turning radius reaching 30 meters is also present. Therefore, the angle $\theta$ of change in the traveling direction of the railway vehicle is significantly smaller than that of the automobile. Therefore, the information processing device 5 can function more suitably in a case where the information processing device 5 is mounted on a railway vehicle traveling on a railway track.

2. Second Arrangement

The first arrangement describes the case where a corrected frame CF is generated at a frequency equivalent to the frequency at which a frame F is generated. A second arrangement is different from the first arrangement in that a corrected frame CF and an interpolated frame in which an object is detected with accuracy equivalent to that in the corrected frame CF are generated at a frequency higher than the frequency at which a frame F is generated. Configurations and operations different from those described in the first arrangement will be mainly described below. Description of configurations and operations equivalent to those described in the first arrangement will be omitted as appropriate.

2.1 Control Circuit

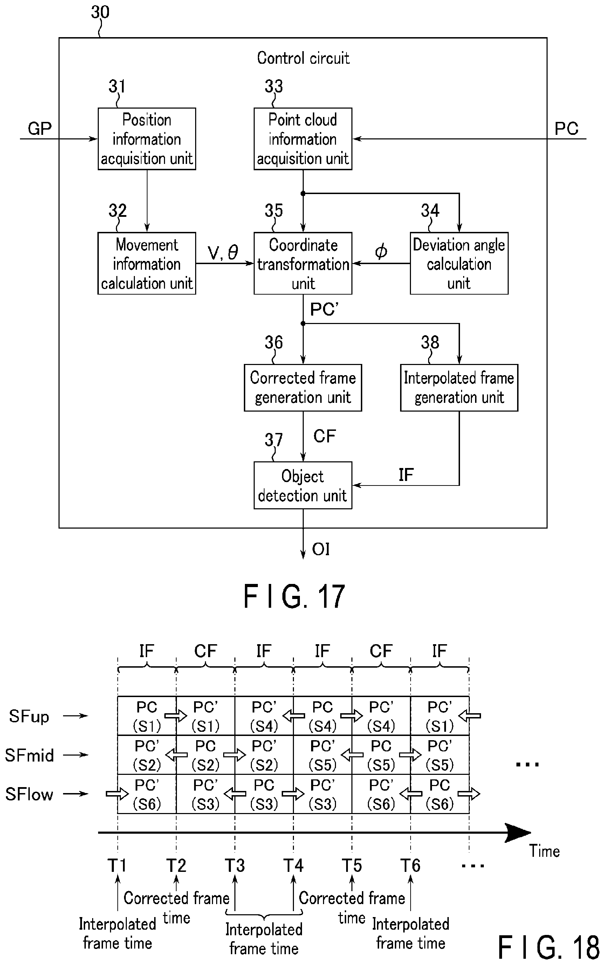

FIG. 17 is a block diagram illustrating an example of a functional configuration of a control circuit of an information processing device according to the second arrangement. FIG. 17 corresponds to FIG. 9 in the first arrangement. In the second arrangement, the control circuit 30 functions as a computer further including an interpolated frame generation unit 38 in addition to a position information acquisition unit 31, a movement information calculation unit 32, a point cloud information acquisition unit 33, a deviation angle calculation unit 34, a coordinate transformation unit 35, a corrected frame generation unit 36, and an object detection unit 37.

Since the configurations of the position information acquisition unit 31, the movement information calculation unit 32, the point cloud information acquisition unit 33, and the deviation angle calculation unit 34 are the same as those described in the first arrangement, the description thereof will be omitted.

In the coordinate transformation unit 35, configurations of a distance vector calculation unit 35-1, a first rotation unit 35-2, a translation unit 35-3, and a second rotation unit 35-4 related to a coordinate transformation operation are the same as those described in the first arrangement. A difference from the coordinate transformation unit 35 in the first arrangement is that a coordinate transformation operation based on a target time for generating an interpolated frame IF in addition to a target time for generating a corrected frame CF is performed. For example, in a case where a corrected frame CF is generated with a time T2 among measurement times T1, T2, and T3 as the target time for generating the corrected frame CF, interpolated frames IF are generated with the times T1 and T3 as target times for generating the interpolated frame IF. Each of the interpolated frames IF is a frame formed based on several subframes SF among a plurality of subframes SF forming a certain frame F and several subframes SF among a plurality of subframes SF forming a frame F different from the certain frame F. Details of the interpolated frames IF will be described later.

The coordinate transformation unit 35 transmits point cloud information PC' transformed into a LiDAR coordinate system at the target time for generating the corrected frame CF to the corrected frame generation unit 36. For example, the coordinate transformation unit 35 transmits point cloud information PC'(S1) and PC'(S3) transformed into the LiDAR coordinate system at the time T2 to the corrected frame generation unit 36.

The coordinate transformation unit 35 also transmits point cloud information PC' transformed into the LiDAR coordinate system at the target time for generating the interpolated frame IF to the interpolated frame generation unit 38. For example, the coordinate transformation unit 35 transmits point cloud information PC'(S2) transformed into the LiDAR coordinate system at the time T1 and the point cloud information PC'(S2) transformed into the LiDAR coordinate system at the time T3 to the interpolated frame generation unit 38.

The corrected frame generation unit 36 generates the corrected frame CF based on the point cloud information PC' transformed into the LiDAR coordinate system at the target time for generating the corrected frame CF. The corrected frame generation unit 36 transmits the corrected frame CF to the object detection unit 37.

The interpolated frame generation unit 38 generates the interpolated frame IF based on the point cloud information PC' transformed into the LiDAR coordinate system at the target time for generating the interpolated frame IF. The interpolated frame generation unit 38 transmits the interpolated frame IF to the object detection unit 37.

Upon receiving the corrected frame CF, the object detection unit 37 detects an object OBJ included in a field of view FOV based on the corrected frame CF. Upon receiving the interpolated frame IF, the object detection unit 37 detects the object OBJ included in the field of view FOV based on the interpolated frame IF. The object detection unit 37 outputs a result of detecting the object OBJ to the user via the user interface 40. The object detection unit 37 may output the corrected frame CF or the interpolated frame IF to the user in addition to the result of detecting the object OBJ.

2.2 Interpolated Frame

FIG. 18 is a timing chart illustrating an example of a relationship between subframes and interpolated frames obtained from point cloud information according to the second arrangement. FIG. 18 corresponds to FIG. 13 in the first arrangement. In FIG. 18, the time T2 and a time T5 that are target times of corrected frames CF are indicated as corrected frame times, and the times T1 and T3 and times T4 and T6 that are target times of interpolated frames IF are indicated as interpolated frame times.

As illustrated in FIG. 18, the interpolated frames IF are expressed in the LiDAR coordinate system at the interpolated frame times. For example, the interpolated frame IF at the time T3 as the interpolated frame time is generated from point cloud information PC'(S4) obtained by transforming coordinates of point cloud information PC(S4) measured at the time T4, the point cloud information PC'(S2) obtained by transforming coordinates of point cloud information PC(S2) measured at the time T2, and point cloud information PC(S3) measured at the time T3. For example, the interpolated frame IF at the time T4 as the interpolated frame time is generated from the point cloud information PC(S4) measured at the time T4, point cloud information PC'(S5) obtained by transforming coordinates of point cloud information PC(S5) measured at the time T5, and the point cloud information PC'(S3) obtained by transforming coordinates of the point cloud information PC(S3) measured at the time T3.

2.3 Object Detection Operation

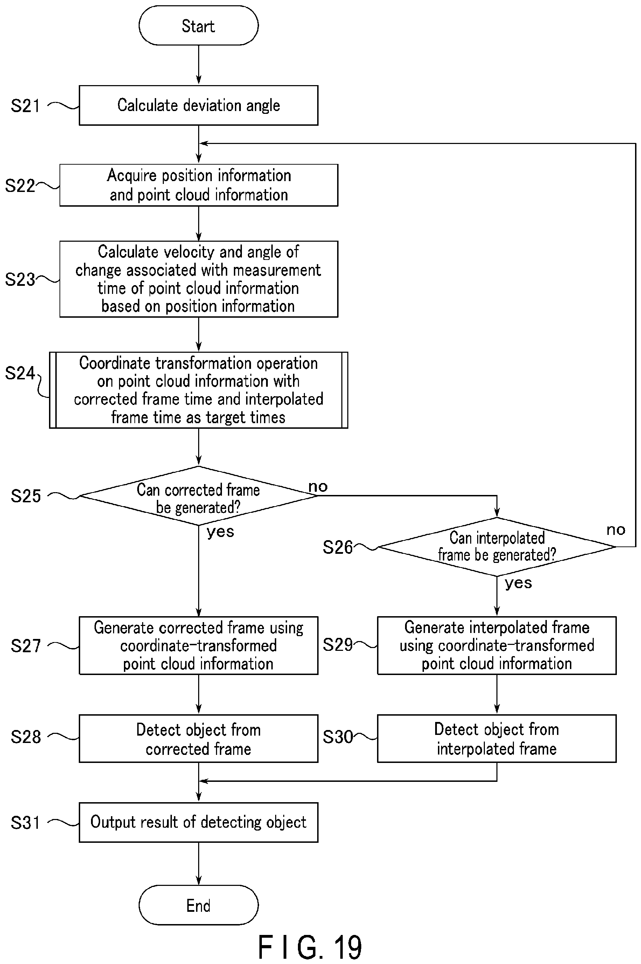

FIG. 19 is a flowchart illustrating an example of an object detection operation in the information processing device according to the second arrangement. FIG. 19 corresponds to FIG. 15 in the first arrangement.

Upon receiving an instruction to start the object detection operation (start), the deviation angle calculation unit 34 calculates a deviation angle φ (S21).

The position information acquisition unit 31 and the point cloud information acquisition unit 33 acquire position information GP from a positioning sensor 10 and point cloud information PC from a laser range scanner 20, respectively (S22).

The movement information calculation unit 32 calculates a velocity V and an angle θ of change associated with a measurement time of the point cloud information PC acquired in the processing of S22 based on the position information GP acquired in the processing of S22 (S23).

Based on the deviation angle φ calculated in the processing of S21 and the velocity V and the angle θ of change calculated in the processing of S23, the coordinate transformation unit 35 performs the coordinate transformation operation on the point cloud information PC acquired in the processing of S22 with a corrected frame time and an interpolated frame time as target times (S24). Details of the processing of S24 are equivalent to those of the processing of S15-1 to S15-4 illustrated in FIG. 16 in the first arrangement.

The corrected frame generation unit 36 determines whether or not a corrected frame CF can be generated (S25). Whether or not the corrected frame CF can be generated is determined by, for example, determining whether or not all subframes SF forming the corrected frame CF are prepared.

In a case where the corrected frame generation unit 36 determines that the corrected frame CF cannot be generated (S25; no), the interpolated frame generation unit 38 determines whether or not an interpolated frame IF can be generated (S26). Whether or not the interpolated frame IF can be generated is determined by, for example, determining whether or not all subframes SF forming the interpolated frame IF are prepared.

In a case where the interpolated frame generation unit 38 determines that the interpolated frame IF cannot be generated (S26; no), the position information acquisition unit 31 and the point cloud information acquisition unit 33 acquire the position information GP from the positioning sensor 10 and the point cloud information PC from the laser range scanner 20, respectively (S22). Then, the control circuit 30 executes subsequent processing of S23 to S26. In this manner, the processing of S22 to S26 is repeated until it is determined that the corrected frame CF or the interpolated frame IF can be generated.

In a case where the corrected frame generation unit 36 determines that the corrected frame CF can be generated (S25; yes), the corrected frame generation unit 36 generates the corrected frame CF using point cloud information PC' generated in the processing of S24 (S27).

After the processing of S27, the object detection unit 37 detects the object OBJ from the corrected frame CF generated in the processing of S27 (S28).

In a case where the interpolated frame generation unit 38 determines that the interpolated frame IF can be generated (S26; yes), the interpolated frame generation unit 38 generates the interpolated frame IF using the point cloud information PC' generated in the processing of S24 (S29) .

After the processing of S29, the object detection unit 37 detects the object OBJ from the interpolated frame IF generated in the processing of S29 (S30).

After the processing of S28 or after the processing of S30, the object detection unit 37 outputs a result of detecting the object OBJ to the user via the user interface 40 (S31).

When the processing of S31 ends, the object detection operation ends (end).

2.4 Effects According to Second Arrangement

According to the second arrangement, the coordinate transformation unit 35 transforms point cloud information PC(S1) from the LiDAR coordinate system at the time T1 to the LiDAR coordinate system at the time T2, and transforms point cloud information PC(S2) from the LiDAR coordinate system at the time T2 to the LiDAR coordinate system at the time T1. As a result, a corrected frame CF or an interpolated frame IF is generated every time point cloud information PC is measured. Therefore, the object detection unit 37 can perform the object detection at a higher frequency than that in a case where the object detection is performed to detect the object from the corrected frame CF. Therefore, the accuracy of detecting the object OBJ can be improved.

3. Third Arrangement

The first arrangement and the second arrangement describe the case where point cloud information PC at one measurement time is used for each subframe SF. A third arrangement is different from the first arrangement and the second arrangement in that point cloud information PC at a plurality of measurement times is used for each subframe SF. Configurations and operations different from those described in the first arrangement and the second arrangement will be mainly described below. Description of configurations and operations equivalent to those described in the first arrangement and the second arrangement will be omitted as appropriate.

3.1 Control Circuit

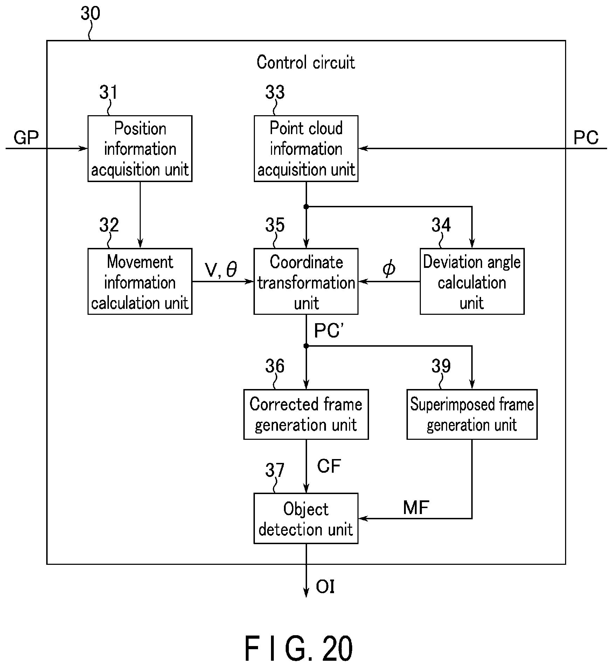

FIG. 20 is a block diagram illustrating an example of a functional configuration of a control circuit of an information processing device according to the third arrangement. FIG. 20 corresponds to FIG. 9 in the first arrangement. In the third arrangement, the control circuit 30 functions as a computer including a superimposed frame generation unit 39 in addition to a position information acquisition unit 31, a movement information calculation unit 32, a point cloud information acquisition unit 33, a deviation angle calculation unit 34, a coordinate transformation unit 35, a corrected frame generation unit 36, and an object detection unit 37.

Since the configurations of the position information acquisition unit 31, the movement information calculation unit 32, the point cloud information acquisition unit 33, and the deviation angle calculation unit 34 are the same as those described in the first arrangement, the description thereof will be omitted.

In the coordinate transformation unit 35, configurations of a distance vector calculation unit 35-1, a first rotation unit 35-2, a translation unit 35-3, and a second rotation unit 35-4 related to a coordinate transformation operation are the same as those described in the first arrangement. A difference from the coordinate transformation unit 35 in the first arrangement is that a coordinate transformation operation based on a target time for generating a superimposed frame MF in addition to a target time for generating a corrected frame CF is performed. For example, in a case where two corrected frames CF are generated with times T2 and T5 as target times for generating the corrected frames CF, one superimposed frame MF is generated with a time T5 as a target time for generating the superimposed frame MF based on the two corrected frames CF. The superimposed frame MF is a frame including a subframe SF obtained by superimposing a subframe SF forming a certain frame F on a subframe SF forming a frame F different from the certain frame F. Details of the superimposed frame MF will be described later.

The coordinate transformation unit 35 transmits point cloud information PC' transformed into a LiDAR coordinate system at the target time for generating the corrected frame CF to the corrected frame generation unit 36. For example, the coordinate transformation unit 35 transmits point cloud information PC'(S1) and PC'(S3) transformed into the LiDAR coordinate system at the time T2 and point cloud information PC'(S4) and PC'(S6) transformed into the LiDAR coordinate system at the time T5 to the corrected frame generation unit 36.

The coordinate transformation unit 35 also transmits point cloud information PC' transformed into the LiDAR coordinate system at the target time for generating the superimposed frame MF to the superimposed frame generation unit 39. For example, the coordinate transformation unit 35 transforms the point cloud information PC'(S1), PC(S2), and PC'(S3) expressed in the LiDAR coordinate system at the time T2 into point cloud information PC"(S1), PC"(S2) and PC"(S3) expressed in the LiDAR coordinate system at the time T5. Then, the coordinate transformation unit 35 transmits the point cloud information PC"(S1), PC"(S2), PC"(S3), PC'(S4), and PC'(S6) transformed into the LiDAR coordinate system at the time T5 to the superimposed frame generation unit 39.

The corrected frame generation unit 36 generates the corrected frame CF based on the point cloud information PC' transformed into the LiDAR coordinate system at the target time for generating the corrected frame CF. The corrected frame generation unit 36 transmits the corrected frame CF to the object detection unit 37.

The superimposed frame generation unit 39 generates the superimposed frame MF based on the point cloud information PC' and PC" transformed into the LiDAR coordinate system at the target time for generating the superimposed frame MF. The superimposed frame generation unit 39 transmits the superimposed frame MF to the object detection unit 37.

Upon receiving the corrected frame CF, the object detection unit 37 detects an object OBJ included in a field of view FOV based on the corrected frame CF. Upon receiving the superimposed frame MF, the object detection unit 37 detects the object OBJ included in the field of view FOV based on the superimposed frame MF. The object detection unit 37 outputs a result of detecting the object OBJ to the user via the user interface 40. The object detection unit 37 may output the corrected frame CF or the superimposed frame MF to the user in addition to the result of detecting the object OBJ.

3.2 Superimposed Frame

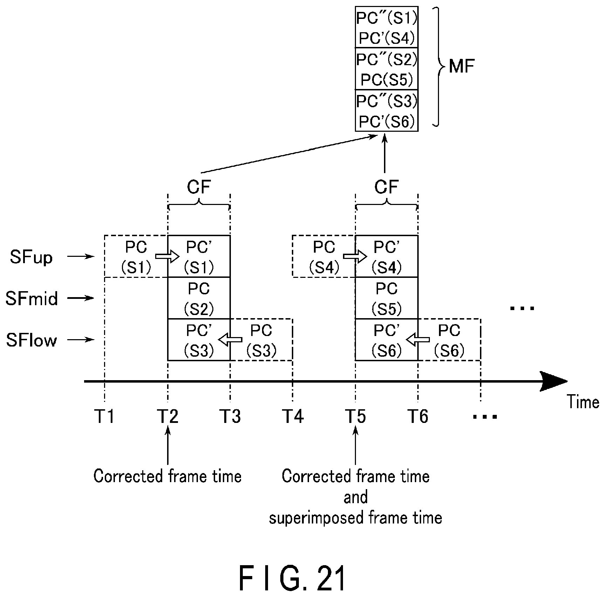

FIG. 21 is a timing chart illustrating an example of a relationship between the subframes and the superimposed frame obtained from the point cloud information according to the third arrangement. FIG. 21 corresponds to FIG. 13 in the first arrangement. In FIG. 21, times T2 and T5, which are target times of corrected frames CF, are indicated as corrected frame times, and the time T5, which is a target time of a superimposed frame MF, is indicated as a superimposed frame time. That is, in the example of FIG. 21, the time T5 is the corrected frame time and the superimposed frame time.

As illustrated in FIG. 21, the superimposed frame MF is expressed in the LiDAR coordinate system at the superimposed frame time. For example, similarly to the corrected frame CF at the time T5 as the corrected frame time, the superimposed frame MF includes the point cloud information PC'(S4) obtained by transforming coordinates of point cloud information PC(S4) measured at a time T4, point cloud information PC(S5) measured at the time T5, and the point cloud information PC'(S6) obtained by transforming coordinates of point cloud information PC(S6) measured at a time T6. The superimposed frame MF further includes point cloud information PC"(S1), PC"(S2) and PC"(S3) obtained by transforming coordinates of the corrected frame CF at the time T2 as the corrected frame time into the LiDAR coordinate system at the time T5.

Here, the point cloud information PC"(S1) and the point cloud information PC'(S4) are treated as one piece of point cloud information PC forming a subframe SFup in the superimposed frame MF. The point cloud information PC"(S2) and PC(S5) are treated as one piece of point cloud information PC forming a subframe SFmid in the superimposed frame MF. The point cloud information PC"(S3) and PC'(S6) are treated as one piece of point cloud information forming a subframe SFlow in the superimposed frame MF.

3.3 Object Detection Operation

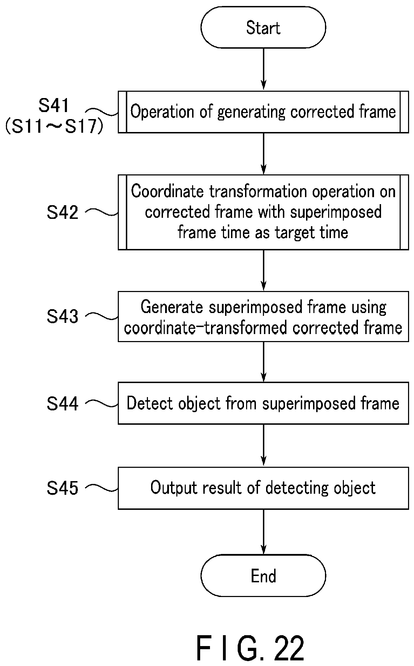

FIG. 22 is a flowchart illustrating an example of an object detection operation in the information processing device according to the third arrangement. FIG. 22 corresponds to FIG. 15 in the first arrangement.

Upon receiving an instruction to start the object detection operation (start), the control circuit 30 executes an operation of generating a corrected frame CF (S41). Details of the processing of S41 are equivalent to those of the processing of S11 to S17 illustrated in FIG. 15 in the first arrangement.

The coordinate transformation unit 35 performs a coordinate transformation operation of transforming coordinates of the corrected frame CF with a superimposed frame time as a target time (S42). Details of the processing of S42 are equivalent to those of the processing of S15-1 to S15-4 illustrated in FIG. 16 in the first arrangement.

The superimposed frame generation unit 39 generates a superimposed frame MF by using the corrected frame CF subjected to the coordinate transformation in the processing of S42 (S43).

The object detection unit 37 detects the object OBJ from the superimposed frame MF generated in the processing of S43 (S44).

The object detection unit 37 outputs a result of detecting the object OBJ to the user via the user interface 40 (S45).

When the processing of S45 ends, the object detection operation ends (end).

3.4 Effects According to Third Arrangement

According to the third arrangement, the coordinate transformation unit 35 transforms the point cloud information PC(S4) from the LiDAR coordinate system at the time T4 to the LiDAR coordinate system at the time T5, and transforms point cloud information PC(S1) from the LiDAR coordinate system at the time T1 to the LiDAR coordinate system at the time T5. As a result, a subframe SF can be generated based on more pieces of point cloud information PC than in a case where a subframe SF is generated from one piece of point cloud information PC. Therefore, it is possible to increase the number of points regarding the distant object OBJ from which reflected light Lr is not easily received. Therefore, the accuracy of detecting the distant object OBJ can be improved.

Note that, in a case where the object OBJ (obstacle) present in the traveling direction is detected by the object detection operation, it is preferable that the moving object RV be able to avoid collision with the obstacle by executing an emergency stop or the like.

In this case, a travel distance required for an emergency stop of an automobile traveling at 80 km/h is about 80 meters, whereas a travel distance required for an emergency stop of a railway vehicle traveling at 80 km/h is about 250 meters. On the other hand, the number of points of point cloud information PC obtained from the LiDAR scanner, which is the laser range scanner 20, is inversely proportional to the square of the distance to the object OBJ. Therefore, the number of points obtained from the object OBJ about 300 meters away is about 1/9 of the number of points obtained from the object OBJ about 100 meters away. That is, the number of points of point cloud information PC obtained corresponding to an obstacle to be detected for the railway vehicle is about 1/9 of that of the automobile.

According to the third arrangement, the information processing device 5 can increase the number of points of point cloud information PC obtained from one frame by generating the superimposed frame MF. Therefore, the information processing device 5 can function more suitably in a case where the information processing device 5 is mounted on a railway vehicle traveling on a railway track.

4. Modifications

The first arrangement, the second arrangement, and the third arrangement described above are not limited thereto, and various modifications can be appropriately applied.

In the third arrangement described above, the case where all points in the point cloud information PC forming the corrected frame CF are used for the superimposed frame MF has been described, but the present invention is not limited thereto. For example, a point corresponding to the distant object OBJ and included in the point cloud information PC forming the corrected frame CF may be selectively used for the superimposed frame MF.

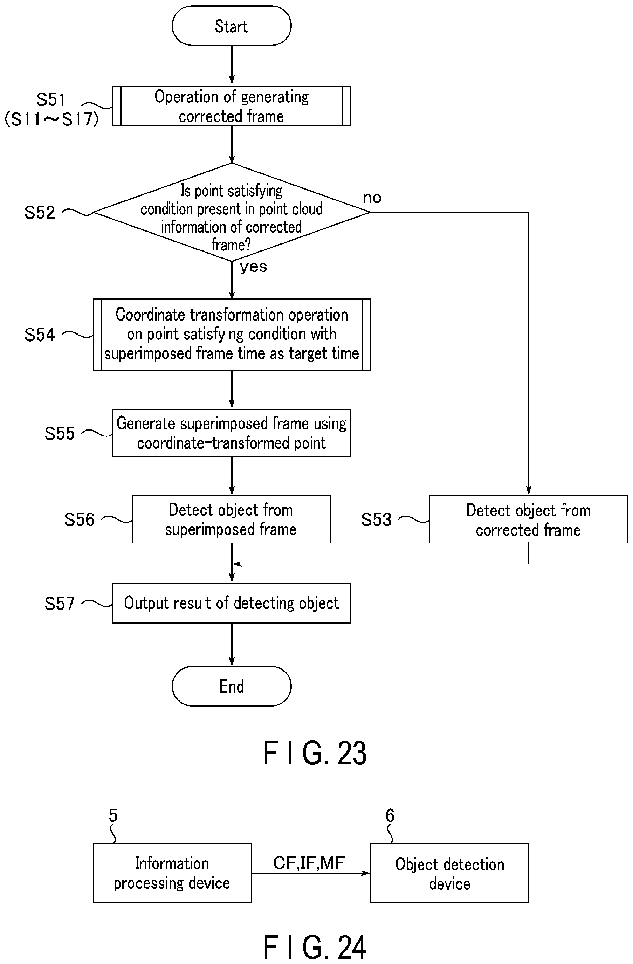

FIG. 23 is a flowchart illustrating an example of an object detection operation in an information processing device according to a first modification. FIG. 23 corresponds to FIG. 22 in the third arrangement.

Upon receiving an instruction to start the object detection operation (start), a control circuit 30 executes an operation of generating a corrected frame CF (S51).

A coordinate transformation unit 35 determines whether or not a point satisfying a condition is present in point cloud information PC forming the corrected frame CF (S52). The condition includes, for example, a condition that a $Z_L$ component of a distance or of a coordinate value is equal to or larger than a threshold value.

In a case where the point satisfying the condition is not present (S52; no), an object detection unit 37 detects an object OBJ from the corrected frame CF (S53).

In a case where the point satisfying the condition is present (S52; yes), the coordinate transformation unit 35 executes a coordinate transformation operation of transforming coordinates of the point determined to satisfy the condition in the processing of S52 with a superimposed frame time as a target time (S54). Details of the processing of S54 are equivalent to those of the processing of S15-1 to S15-4 illustrated in FIG. 16 in the first arrangement.

A superimposed frame generation unit 39 generates a superimposed frame MF by using the point whose coordinates were transformed in the processing of S54 (S55).

The object detection unit 37 detects the object OBJ from the superimposed frame MF generated in the processing of S55 (S56).

After the processing of S53 or after the processing of S56, the object detection unit 37 outputs a result of detecting the object OBJ to a user via a user interface 40 (S57) .

When the processing of S57 ends, the object detection operation ends (end).

According to the first modification described above, the coordinate transformation unit 35 selects a point having a distance equal to or greater than a threshold value from among a plurality of points included in the point cloud information PC. The coordinate transformation unit 35 performs a coordinate transformation operation for generating a superimposed frame MF for the selected point. As a result, it is possible to reduce the data amount of the point cloud information PC used for generating the superimposed frame MF. Therefore, the calculation load due to the coordinate transformation operation can be reduced without reducing the accuracy of detecting the distant object OBJ.

Furthermore, in the first arrangement, the second arrangement, and the third arrangement described above, the case where the information processing device 5 detects the object OBJ has been described, but the prevent invention is not limited thereto. For example, as illustrated in FIG. 24, an object detection device 6 different from the information processing device 5 may detect the object OBJ based on the corrected frame CF, the interpolated frame IF, or the superimposed frame MF generated by the information processing device 5. The object detection device 6 may output a result OI of detecting the object OBJ to the user.

In the first arrangement, the second arrangement, and the third arrangement described above, the case where the movement information calculation unit 32 directly calculates the velocity V and the angle θ of change from the position information has been described, but the present invention is not limited thereto. For example, the movement information calculation unit 32 may store in advance, as a database, information regarding a position where the railway track is arranged. In this case, the movement information calculation unit 32 may calculate the velocity V and the angle θ of change by comparing the position information with the database.

In the first arrangement, the second arrangement, and the third arrangement described above, the case where the plurality of reflective surfaces S1 to S6 forming the mirror 22-5 correspond to the plurality of subframes SF arranged in the direction perpendicular to the ground has been described, but the present invention is not limited thereto. For example, the plurality of reflective surfaces S1 to S6 forming the mirror 22-5 may correspond to a plurality of subframes SF arranged in a horizontal direction with respect to the ground.

Some or all of the above arrangements may be described as the following clauses, but are not limited to the following.

Clause 1. An information processing device including:

a first calculation unit configured to calculate a velocity of a moving object and an angle of change in a traveling direction of the moving object based on position information indicating a position of the moving object;
a second calculation unit configured to calculate, based on point cloud information measured in a first coordinate system fixed to the moving object, a deviation angle between a second coordinate system fixed to the moving object and having an axis along the traveling direction and the first coordinate system; and
a transformation unit configured to transform first point cloud information measured at a first time from the first coordinate system at the first time to the first coordinate system at a second time based on the velocity, the angle of change, and the deviation angle.

Clause 2. The information processing device described in Clause 1, wherein the transformation unit includes:

a third calculation unit configured to calculate, based on the velocity, a distance vector indicating a distance traveled by the moving object from the first time to the second time in the second coordinate system at the first time;
a first rotation unit configured to rotate the distance vector from the second coordinate system at the first time to the first coordinate system at the first time based on the deviation angle;

**EP 4 375 699 A1**

a translation unit configured to translate the first point cloud information based on the distance vector rotated by the first rotation unit; and

a second rotation unit configured to rotate the translated first point cloud information from the first coordinate system at the first time to the first coordinate system at the second time based on the angle of change.

Clause 3. The information processing device described in Clause 1, wherein the transformation unit is further configured to transform second point cloud information measured at the second time from the first coordinate system at the second time to the first coordinate system at the first time.

Clause 4. The information processing device described in Clause 1, wherein the transformation unit is further configured to transform third point cloud information measured at a third time from the first coordinate system at the third time to the first coordinate system at the second time.

Clause 5. The information processing device described in Clause 4, wherein the transformation unit is configured to:

select a point having a distance equal to or greater than a threshold value from among a plurality of points included in the third point cloud information; and

further transform the selected point from the first coordinate system at the third time to the first coordinate system at the second time.

Clause 6. The information processing device described in any one of Clauses 1 to 5, wherein the second calculation unit is configured to calculate the deviation angle based on fourth point cloud information and fifth point cloud information measured at different times while the moving object is traveling straight.

Clause 7. The information processing device described in Clause 6, wherein the second calculation unit is configured to calculate the deviation angle based on information regarding a first object included in common in the fourth point cloud information and the fifth point cloud information.

Clause 8. The information processing device described in Clause 7, wherein the first object is a railway track provided along the traveling direction, an overhead line pole, or a railway sign.

Clause 9. The information processing device described in any one of Clauses 1 to 5, wherein the second calculation unit is configured to calculate the deviation angle based on sixth point cloud information measured while the moving object is stationary.

Clause 10. The information processing device described in Clause 9, wherein the second calculation unit is configured to calculate the deviation angle based on information regarding a second object included in the sixth point cloud information and a third object present in the traveling direction with respect to the second object.

Clause 11. The information processing device described in Clause 10, wherein the second object and the third object are a railway track provided along the traveling direction, an overhead line pole, or a railway sign.

Clause 12. The information processing device described in any one of Clauses 1 to 5, further including a detection unit configured to detect an object around the moving object based on the transformed first point cloud information.

Clause 13. An information processing system including:

an information processing device including

a first calculation unit configured to calculate a velocity of a moving object and an angle of change in a traveling direction of the moving object based on position information indicating a position of the moving object,

a second calculation unit configured to calculate, based on point cloud information measured in a first coordinate system fixed to the moving object, a deviation angle between a second coordinate system fixed to the moving object and having an axis along the traveling direction and the first coordinate system, and

a transformation unit configured to transform first point cloud information measured at a first time from the first coordinate system at the first time to the first coordinate system at a second time based on the velocity, the angle of change, and the deviation angle;

the moving object;

a positioning sensor configured to generate the position information; and

a laser range scanner that is mounted on the moving object and configured to generate the point cloud information.

Clause 14. The information processing system described in Clause 13, wherein the moving object is a railway vehicle traveling on a railway track.

Clause 15. The information processing system described in Clause 14, wherein the first calculation unit is configured to calculate the velocity and the angle of change further based on information regarding the railway track.

Clause 16. The information processing system described in Clause 14 or 15, wherein the point cloud information indicates a portion included in the railway track and provided along the traveling direction and an object on the railway track.

Clause 17. The information processing system described in any one of Clauses 13 to 15, wherein the laser range scanner is a light detection and ranging (LiDAR) scanner.

Clause 18. The information processing system described in Clause 17, wherein

the laser range scanner includes a polygon mirror having a plurality of reflective surfaces, and
the point cloud information is associated with one of the plurality of reflective surfaces.

Clause 19. A program for causing a computer to function as each of the units included in the information processing device according to any one of Clauses 1 to 12.

While certain arrangements have been described, these arrangements have been presented by way of example only, and are not intended to limit the scope of the claims. Indeed, the device described herein may be embodied in a variety of other forms; furthermore various omissions, substitutions and changes in the form of the apparatuses described herein may be made.

**Claims**

**1.** An information processing device comprising:

a first calculation unit (32) configured to calculate a velocity (V) of a moving object (RV) and an angle ($\theta$) of change in a traveling direction of the moving object based on position information indicating a position of the moving object;

a second calculation unit (34) configured to calculate, based on point cloud information measured in a first coordinate system fixed to the moving object, a deviation angle ($\varphi$) between a second coordinate system fixed to the moving object and having an axis along the traveling direction and the first coordinate system; and

a transformation unit (35) configured to transform first point cloud information measured at a first time from the first coordinate system at the first time to the first coordinate system at a second time based on the velocity, the angle of change, and the deviation angle.

**2.** The information processing device according to claim 1, wherein
the transformation unit includes:

a third calculation unit (35-1) configured to calculate, based on the velocity, a distance vector indicating a distance traveled by the moving object from the first time to the second time in the second coordinate system at the first time;

a first rotation unit (35-2) configured to rotate the distance vector from the second coordinate system at the first time to the first coordinate system at the first time based on the deviation angle;

a translation unit (35-3) configured to translate the first point cloud information based on the distance vector rotated by the first rotation unit; and

a second rotation unit (35-4) configured to rotate the translated first point cloud information from the first coordinate system at the first time to the first coordinate system at the second time based on the angle of change.

**3.** The information processing device according to claim 1, wherein
the transformation unit is further configured to transform second point cloud information measured at the second time from the first coordinate system at the second time to the first coordinate system at the first time.

**4.** The information processing device according to claim 1, wherein
the transformation unit is further configured to transform third point cloud information measured at a third time from the first coordinate system at the third time to the first coordinate system at the second time.

**5.** The information processing device according to claim 4, wherein
the transformation unit is configured to:

select a point having a distance equal to or greater than a threshold value from among a plurality of points included in the third point cloud information; and

further transform the selected point from the first coordinate system at the third time to the first coordinate system at the second time.

6. The information processing device according to claim 1, wherein
   the second calculation unit is configured to calculate the deviation angle based on fourth point cloud information and fifth point cloud information measured at different times while the moving object is traveling straight.

7. The information processing device according to claim 6, wherein
   the second calculation unit is configured to calculate the deviation angle based on information regarding a first object included in common in the fourth point cloud information and the fifth point cloud information.

8. The information processing device according to claim 7, wherein
   the first object is a railway track provided along the traveling direction, an overhead line pole, or a railway sign.

9. The information processing device according to claim 1, wherein
   the second calculation unit is configured to calculate the deviation angle based on sixth point cloud information measured while the moving object is stationary.

10. The information processing device according to claim 9, wherein
    the second calculation unit is configured to calculate the deviation angle based on information regarding a second object included in the sixth point cloud information and a third object present in the traveling direction with respect to the second object.

11. The information processing device according to claim 10, wherein
    the second object and the third object are a railway track provided along the traveling direction, an overhead line pole, or a railway sign.

12. The information processing device according to claim 1, further comprising
    a detection unit (37) configured to detect an object around the moving object based on the transformed first point cloud information.

13. An information processing system comprising:

    the moving object;
    a positioning sensor (10) configured to generate the position information;
    a laser range scanner (20) that is mounted on the moving object and configured to generate the point cloud information; and
    the information processing device (5) according to any one of claims 1 to 12.

14. The information processing system according to claim 13, wherein
    the moving object is a railway vehicle traveling on a railway track.

15. A program for causing a computer to function as each of the units included in the information processing device according to any one of claims 1 to 12.

F I G. 1

F I G. 2

F I G. 3

F I G. 4

22-5

S2
S3
S1
S4
FOV(S1)～FOV(S6)
S5 S6

## FIG. 5

22-5

FOV(S1), FOV(S4)
FOV(S2), FOV(S5)
FOV(S3), FOV(S6)

## FIG. 6

F I G. 7

F I G. 8

30

Control circuit

31
GP → Position information acquisition unit

33
Point cloud information acquisition unit ← PC

32
Movement information calculation unit

35
V, θ → Coordinate transformation unit ← φ

34
Deviation angle calculation unit

PC'

36
Corrected frame generation unit

CF

37
Object detection unit

OI

F I G. 9

F I G. 10

F I G. 11

35

## Coordinate transformation unit

35-1 → Distance vector calculation unit → 35-2 First rotation unit → 35-3 Translation unit → 35-4 Second rotation unit → PC'

V → (35-1)

$\phi$ → (35-2)

PC → (35-3)

$\theta$ → (35-4)

# F I G. 12

CF

SFup →  PC (S1) ⇒ PC' (S1)    PC (S4) ⇒ PC' (S4)

SFmid →  PC (S2)    PC (S5)

SFlow →  PC' (S3) ⇐ PC (S3)    PC' (S6) ⇐ PC (S6)

Time

T1  T2  T3  T4  T5  T6 · · ·

↑ Corrected frame time    ↑ Corrected frame time

# F I G. 13

CF

$Y_L$

$X_L$ ← ⊗ $Z_L$

SFup
SFmid
SFlow

# F I G. 14

Start

S11 — Calculate deviation angle

S12 — Acquire position information and point cloud information

S13 — Calculate velocity and angle of change associated with measurement time of point cloud information based on position information

S14 — Is measurement time of point cloud information different from target time? — no

yes

S15 — Coordinate transformation operation on point cloud information with corrected frame time as target time

S16 — Can corrected frame be generated? — no

yes

S17 — Generate corrected frame using coordinate-transformed point cloud information

S18 — Detect object from corrected frame

S19 — Output result of detecting object

End

F I G. 15

Start

S15 {

S15-1 — Generate distance vector of moving object coordinate system from measurement time to target time based on velocity

S15-2 — Transform coordinate system of distance vector from moving object coordinate system to LiDAR coordinate system based on deviation angle

S15-3 — Translate point cloud information based on distance vector transformed into LiDAR coordinate system

S15-4 — Transform coordinate system of point cloud information from LiDAR coordinate system at measurement time to LiDAR coordinate system at target time based on angle of change

End

F I G. 16

30

F I G. 17

F I G. 18

Start

S21 — Calculate deviation angle

S22 — Acquire position information and point cloud information

S23 — Calculate velocity and angle of change associated with measurement time of point cloud information based on position information

S24 — Coordinate transformation operation on point cloud information with corrected frame time and interpolated frame time as target times

S25 — Can corrected frame be generated? — no

yes

S26 — Can interpolated frame be generated? — no

yes

S27 — Generate corrected frame using coordinate-transformed point cloud information

S29 — Generate interpolated frame using coordinate-transformed point cloud information

S28 — Detect object from corrected frame

S30 — Detect object from interpolated frame

S31 — Output result of detecting object

End

F I G. 19

30

Control circuit

31
Position information acquisition unit

33
Point cloud information acquisition unit

GP →

PC →

32
Movement information calculation unit

35
Coordinate transformation unit

34
Deviation angle calculation unit

$V, \theta$

$\phi$

PC'

36
Corrected frame generation unit

39
Superimposed frame generation unit

37
Object detection unit

CF

MF

OI

# F I G. 20

F I G. 21

```
                        ┌─────────────┐
                        │    Start     │
                        └─────────────┘
                               │
                               ▼
S41        ┌──────────────────────────────────────────┐
(S11~S17)  │ Operation of generating corrected frame  │
           └──────────────────────────────────────────┘
                               │
                               ▼
           ┌──────────────────────────────────────────┐
           │ Coordinate transformation operation on   │
S42        │   corrected frame with superimposed      │
           │        frame time as target time         │
           └──────────────────────────────────────────┘
                               │
                               ▼
           ┌──────────────────────────────────────────┐
S43        │    Generate superimposed frame using     │
           │  coordinate-transformed corrected frame  │
           └──────────────────────────────────────────┘
                               │
                               ▼
           ┌──────────────────────────────────────────┐
S44        │   Detect object from superimposed frame  │
           └──────────────────────────────────────────┘
                               │
                               ▼
           ┌──────────────────────────────────────────┐
S45        │     Output result of detecting object    │
           └──────────────────────────────────────────┘
                               │
                               ▼
                        ┌─────────────┐
                        │     End      │
                        └─────────────┘
```

## F I G. 22

Start

S51
(S11〜S17) — Operation of generating corrected frame

S52 — Is point satisfying condition present in point cloud information of corrected frame? → no

yes

S54 — Coordinate transformation operation on point satisfying condition with superimposed frame time as target time

S55 — Generate superimposed frame using coordinate-transformed point

S56 — Detect object from superimposed frame

S53 — Detect object from corrected frame

S57 — Output result of detecting object

End

F I G. 23

5
Information processing device

CF,IF,MF →

6
Object detection device

F I G. 24

Europäisches
Patentamt

European
Patent Office

Office européen
des brevets

# EUROPEAN SEARCH REPORT

**Application Number**

**EP 23 19 4172**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/313942 A1 (WU KANZHI [CN] ET AL) 1 November 2018 (2018-11-01) | 1-5,12, 13,15 | INV. G01S7/48 |
| Y | * paragraphs [0006], [0023], [0026], [0046], [0048], [0061], [0066], [0077]; figure 7A * | 6-11,14 | G01S7/497 G01S17/58 G01S17/86 G01S17/89 |
| Y | ----- US 2021/109204 A1 (LIAO DONGYI [US] ET AL) 15 April 2021 (2021-04-15) * paragraphs [0006], [0009], [0092], [0093], [0100], [0101], [0112]; claim 1 * ----- | 6-11,14 | G01S17/931 |
| Y | DE 10 2020 212374 A1 (SIEMENS MOBILITY GMBH [DE]) 31 March 2022 (2022-03-31) * paragraph [0016]; claim 1 * ----- | 8,11,14 | |

**TECHNICAL FIELDS SEARCHED (IPC)**

**G01S**

The present search report has been drawn up for all claims

| Place of search | Date of completion of the search | Examiner |
|---|---|---|
| Munich | 6 February 2024 | Grübl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 375 699 A1**

## ANNEX TO THE EUROPEAN SEARCH REPORT
## ON EUROPEAN PATENT APPLICATION NO.

EP 23 19 4172

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2024

| Patent document cited in search report | | Publication date | Patent family member(s) | | Publication date |
|---|---|---|---|---|---|
| US 2018313942 | A1 | 01-11-2018 | CN | 110573830 A | 13-12-2019 |
| | | | EP | 3616159 A1 | 04-03-2020 |
| | | | US | 2018313942 A1 | 01-11-2018 |
| | | | US | 2019064333 A1 | 28-02-2019 |
| | | | US | 2021096230 A1 | 01-04-2021 |
| | | | WO | 2018195986 A1 | 01-11-2018 |
| US 2021109204 | A1 | 15-04-2021 | CN | 114829979 A | 29-07-2022 |
| | | | DE | 112020004984 T5 | 28-07-2022 |
| | | | JP | 2022552293 A | 15-12-2022 |
| | | | US | 2021109204 A1 | 15-04-2021 |
| | | | US | 2021109205 A1 | 15-04-2021 |
| | | | WO | 2021076569 A1 | 22-04-2021 |
| DE 102020212374 A1 | | 31-03-2022 | DE | 102020212374 A1 | 31-03-2022 |
| | | | EP | 3978332 A1 | 06-04-2022 |

EPO FORM P0459

For more details about this annex : see Official Journal of the European Patent Office, No. 12/82

37